# EUROPEAN PATENT APPLICATION

(11) **EP 4 462 290 A1**
(43) Date of publication of application: **13.11.2024**
(21) Application number: 24169653.3
(22) Date of filing: 11.04.2024
(51) Int. Cl.: G06F 21/33, G06F 21/64, H04L 9/32, H04L 9/00, H04L 9/40

(54) **INFORMATION PROCESSING DEVICE, INFORMATION PROCESSING METHOD, AND INFORMATION PROCESSING PROGRAM**

(30) Priority: 11.05.2023 JP 2023078706
(71) Applicant: FUJITSU LIMITED, Kawasaki-shi, Kanagawa 211-8588 (JP)
(72) Inventor: Yuki, Yonekura, Kawasaki-shi, Kanagawa, 211-8588 (JP); Morinaga, Masanobu, Kawasaki-shi, Kanagawa (JP)
(74) Representative: Hoffmann Eitle

(57) **Abstract**

An information processing device includes a control unit that: receives, from a linkage unit that links between blockchains, a processing request that requests generation of a transaction for an object account in an object blockchain; determines whether or not a valid existing token related to the object account in the object blockchain is present based on management information that represents presence or absence of a valid token related to each of one or more accounts in the object blockchain and the received processing request; in a case where it is determined that the existing token is absent, generates a first transaction for the object account in the object blockchain, which is added with a signature related to the object account, controls the object blockchain so as to issue a valid new token related to the object account in the object blockchain, updates the management information, and return the generated first transaction to the linkage unit; and in a case where it is determined that the existing token is present, generates a second transaction for the object account in the object blockchain, and returns the generated second transaction to the linkage unit.

## Description

### FIELD

The embodiment discussed herein is related to an information processing device, an information processing method, an information processing program.

### BACKGROUND

Since before, there has been a system that links a plurality of blockchains. For example, the system described above is implemented by a control device that links a plurality of linkage destination blockchains using a linkage blockchain. Here, in order to take measures against occurrence of a failure in the system, a plurality of the control devices may be prepared and made redundant.

As a prior art, for example, there is a technology that transmits a digital signature generated using an acceptance address. Furthermore, for example, there is a technology of generating a login token. Furthermore, for example, there is a technology of verifying a digital signature corresponding to a referral request using a public key. Furthermore, for example, there is a technology of transmitting a request for a signature value including a verification value to a user terminal when a user certificate is registered in a blockchain. Furthermore, for example, there is a technology of adding a signature to a transaction value and transmitting the transaction value.

Japanese Laid-open Patent Publication No. 2022-166123, U.S. Patent Application Publication No. 2020-0127832, U.S. Patent Application Publication No. 2020-0019980, Japanese Laid-open Patent Publication No. 2019-185774, and Japanese Laid-open Patent Publication No. 2022-003547 are disclosed as related art.

### SUMMARY

### TECHNICAL PROBLEM

However, in the prior art, it is difficult to avoid an attack on the system by any one of the plurality of control devices. For example, a case is conceivable where any one control device falsifies a transaction transmitted to the linkage destination blockchain. On the other hand, there is a problem that a time needed to transmit a transaction to the linkage destination blockchain increases in order to avoid falsification.

In one aspect, an object of an embodiment is to facilitate avoidance of an attack on the system.

According to an aspect of the embodiments, an information processing device includes a control unit that: receives, from a linkage unit that links between blockchains, a processing request that requests generation of a transaction for an object account in an object blockchain; determines whether or not a valid existing token related to the object account in the object blockchain is present based on management information that represents presence or absence of a valid token related to each of one or more accounts in the object blockchain and the received processing request; in a case where it is determined that the existing token is absent, generates a first transaction for the object account in the object blockchain, which is added with a signature related to the object account, controls the object blockchain so as to issue a valid new token related to the object account in the object blockchain, updates the management information, and return the generated first transaction to the linkage unit; and in a case where it is determined that the existing token is present, generates a second transaction for the object account in the object blockchain, and returns the generated second transaction to the linkage unit.

### ADVANTAGEOUS EFFECTS OF INVENTION

According to one aspect, it is possible to facilitate avoidance of an attack on a system.

### BRIEF DESCRIPTION OF DRAWINGS

FIG. 1 is an explanatory diagram illustrating an example of an information processing method according to an embodiment;
FIG. 2 is an explanatory diagram illustrating an example of a linkage processing system 200;
FIG. 3 is an explanatory diagram illustrating an application example of the linkage processing system 200;
FIG. 4 is a block diagram illustrating a hardware configuration example of an information processing device 100;
FIG. 5 is a block diagram illustrating a functional configuration example of the information processing device 100;
FIG. 6 is an explanatory diagram illustrating a first operation example of the information processing device 100;
FIG. 7 is an explanatory diagram (part 1) illustrating a second operation example of the information processing device 100;
FIG. 8 is an explanatory diagram (part 2) illustrating the second operation example of the information processing device 100;
FIG. 9 is an explanatory diagram (part 1) illustrating a specific example of the information processing device 100;
FIG. 10 is an explanatory diagram (part 2) illustrating the specific example of the information processing device 100;
FIG. 11 is an explanatory diagram (part 1) illustrating an example of the information processing device 100;
FIG. 12 is an explanatory diagram (part 2) illustrating the example of the information processing device 100;
FIG. 13 is a flowchart (part 1) illustrating an example of an overall processing procedure;
FIG. 14 is a flowchart (part 2) illustrating the example of the overall processing procedure;
FIG. 15 is a sequence diagram (part 1) illustrating an example of an initial creation processing procedure;
FIG. 16 is a sequence diagram (part 2) illustrating the example of the initial creation processing procedure;
FIG. 17 is a sequence diagram (part 3) illustrating the example of the initial creation processing procedure;
FIG. 18 is a sequence diagram (part 1) illustrating an example of a re-creation processing procedure; and
FIG. 19 is a sequence diagram (part 2) illustrating the example of the re-creation processing procedure.

### DESCRIPTION OF EMBODIMENTS

Hereinafter, an embodiment of an information processing device, an information processing method, and an information processing program will be described in detail with reference to the drawings.

### (Example of Information Processing Method According to Embodiment)

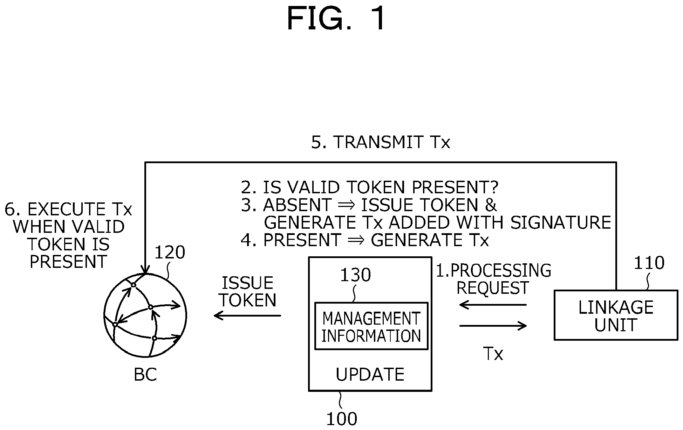

FIG. 1 is an explanatory diagram illustrating an example of the information processing method according to the embodiment. An information processing device 100 is a computer for facilitating improvement in reliability of a linkage processing system that links a plurality of linkage destination blockchains by facilitating avoidance of an attack on the linkage processing system described above. The information processing device 100 is, for example, a server, a personal computer (PC), or the like.

Here, the linkage destination blockchain is a management system that manages a distributed ledger. The linkage destination blockchain includes a plurality of nodes. Each node of the linkage destination blockchain stores and monitors the same distributed ledger, thereby managing the distributed ledger. A blockchain (BC) is a list that manages transactions by linking blocks in which the transactions are registered.

The linkage is to cause each of the plurality of linkage destination blockchains to execute a transaction according to a rule. The transaction is information regarding a transaction. The execution of the transaction is to verify and share the transaction in the linkage destination blockchains.

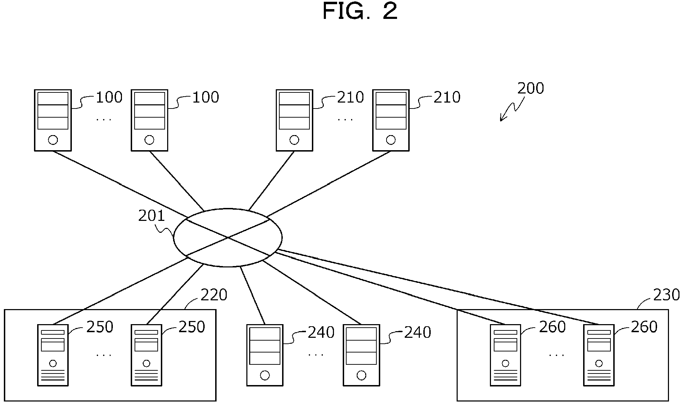

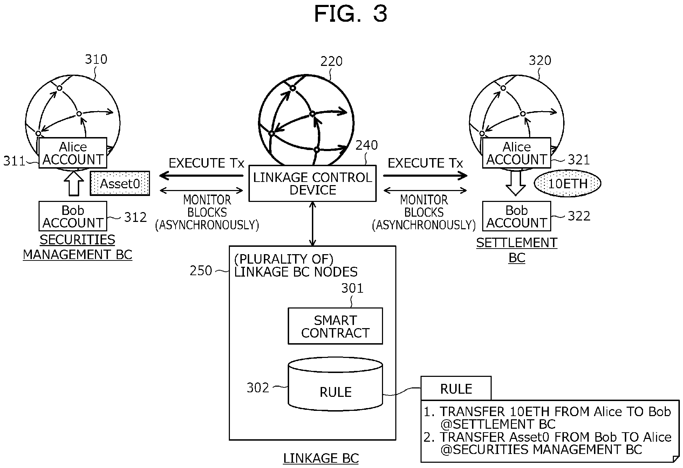

The linkage processing system described above includes, for example, a control device called a linkage engine that links between the linkage destination blockchains, and a linkage blockchain in which a smart contract that defines a linkage rule is deployed. The linkage engine links between the linkage destination blockchains by causing any one of the linkage destination blockchains to execute, every time a transaction is generated according to the linkage rule, the transaction by using the smart contract. A specific example of the linkage processing system described above will be described later with reference to, for example, FIGs. 2 and 3.

Here, in order to take measures against occurrence of a failure in the linkage processing system described above, a plurality of the linkage engines may be prepared and made redundant. For example, a different linkage engine may be prepared for each node of the linkage destination blockchain and made redundant. Each of the plurality of linkage engines may be a linkage engine having a different management entity.

At this time, any one of the plurality of linkage engines may perform an attack on the linkage processing system. For example, a case is conceivable where any one linkage engine falsifies a transaction transmitted to the linkage destination blockchain. For example, a case is conceivable where any one linkage engine causes the linkage destination blockchain to execute a transaction that does not depend on the linkage rule. For example, a case is conceivable where any one linkage engine illegally performs processing that another linkage engine is originally in charge of.

However, since before, it has been difficult to avoid an attack on the linkage processing system by any one linkage engine. For example, a method is conceivable in which the attack is avoided by preparing, outside the linkage engine, a signature device that adds a signature to a transaction. In this method, specifically, the linkage engine temporarily transmits the transaction to the signature device, acquires the transaction added with the signature, and transmits the transaction to the linkage destination blockchain. In this method, specifically, the linkage destination blockchain verifies validity of the signature added to the transaction, and then executes the transaction.

In this method, there is a problem that a time needed from when the linkage engine generates the transaction until the linkage engine transmits the transaction to the linkage destination blockchain is increased. Furthermore, there is a problem that a processing load imposed on the linkage engine is increased.

Therefore, in the present embodiment, an information processing method capable of facilitating avoidance of an attack on a linkage processing system that links a plurality of blockchains will be described. In the following description, a blockchain may be referred to as a "BC". In the following description, a transaction may be referred to as a "Tx".

In FIG. 1, there is a linkage unit 110. The linkage unit 110 corresponds to, for example, the linkage engine. Furthermore, there is an object BC 120. The object BC 120 manages a Tx for an object account using a distributed ledger. The linkage unit 110 transmits, to the information processing device 100, a processing request that requests generation of the Tx for the object account in the object BC 120. The processing request includes, for example, an identifier for identifying the object BC 120. The processing request includes, for example, an identifier for identifying the object account.

The information processing device 100 stores management information 130. The management information 130 represents presence or absence of a valid token related to each of one or more accounts in the object BC 120. The one or more accounts include, for example, the object account. The management information 130 includes, for example, correspondence information in which an identifier for identifying each account is associated with an identifier for identifying a valid token related to the account.

(1-1) The information processing device 100 receives the processing request from the linkage unit 110.

(1-2) The information processing device 100 determines whether or not a valid existing token related to the object account in the object BC 120 is present based on the management information 130 and the received processing request. For example, the information processing device 100 specifies the object BC 120 based on the received processing request. For example, the information processing device 100 specifies the object account based on the received processing request. For example, the information processing device 100 determines whether or not a valid existing token related to the specified object account in the specified object BC 120 is present based on the management information 130.

As a result, the information processing device 100 may determine whether or not the linkage unit 110 is in a situation where the linkage unit 110 may transmit the Tx to the object BC 120 without issuing a valid new token, and may determine whether or not it is unnecessary to issue a valid new token.

(1-3) In a case where it is determined that the existing token is absent, the information processing device 100 generates a signature related to the object account. The information processing device 100 generates a first Tx for the object account in the object BC 120, which is added with the generated signature. The information processing device 100 controls the object BC 120 so as to store a valid new token related to the object account in the object BC 120. For example, the information processing device 100 controls the object BC 120 so as to issue a valid new token related to the object account in the object BC 120. The information processing device 100 updates the management information 130. The information processing device 100 returns the generated first Tx to the linkage unit 110.

As a result, the information processing device 100 may enable verification of validity of the first Tx in the object BC 120 by adding the signature to the first Tx. The information processing device 100 may disenable generation of a signature in the linkage unit, and may facilitate avoidance of an attack by the linkage unit 110. The information processing device 100 may leave the token in the object BC 120 so as to facilitate transmission of a Tx to the object BC 120 by the linkage unit 110 thereafter.

(1-4) In a case where it is determined that the existing token is present, the information processing device 100 generates a second Tx for the object account in the object BC 120. The information processing device 100 returns the generated second Tx to the linkage unit 110.

As a result, the information processing device 100 may omit processing of generating the signature related to the object account and processing of controlling the object BC 120 to store a valid new token. Therefore, the information processing device 100 may reduce a processing load imposed when an attack by the linkage unit 110 is avoided, and may reduce a time needed for the linkage unit 110 to transmit the second Tx to the object BC 120. The information processing device 100 may enable transmission of the second Tx to the object BC 120 by the linkage unit 110.

(1-5) The linkage unit 110 receives, from the information processing device 100, the first Tx added with the signature or the second Tx not added with the signature. The linkage unit 110 transmits, to the object BC 120, the first Tx added with the signature or the second Tx not added with the signature. As a result, the linkage unit 110 may cause the object BC 120 to execute the first Tx added with the signature or the second Tx not added with the signature.

(1-6) The object BC 120 receives, from the linkage unit 110, the first Tx added with the signature or the second Tx not added with the signature. When the first Tx added with the signature or the second Tx not added with the signature is received, the object BC 120 determines whether or not a valid token is present in the object BC 120. When the first Tx added with the signature is received, the object BC 120 verifies validity of the signature.

When the first Tx added with the signature is received, the object BC 120 executes the first Tx in a case where the signature is valid and a valid token is present in the object BC 120. When the first Tx added with the signature is received and the signature is not valid, the object BC 120 discards the first Tx without execution. When the first Tx added with the signature is received, in a case where a valid token is absent in the object BC 120, the object BC 120 discards the first Tx without execution.

When the second Tx not added with the signature is received, in a case where a valid token is present in the object BC 120, the object BC 120 executes the second Tx. When the second Tx not added with the signature is received, in a case where a valid token is absent in the object BC 120, the object BC 120 discards the second Tx without execution. As a result, the object BC 120 may appropriately execute the Tx.

Here, the case has been described where the linkage unit 110 transmits the first Tx added with the signature to the object BC 120, but the present disclosure is not limited to this. For example, the linkage unit 110 may transmit, to the object BC 120, the first Tx in a state of not being added with the signature. In this case, when the first Tx not added with the signature is received, in a case where a valid token is present in the object BC 120, the object BC 120 executes the first Tx. When the first Tx not added with the signature is received, in a case where a valid token is absent in the object BC 120, the object BC 120 discards the first Tx without execution.

Here, the case has been described where the information processing device 100 stores the management information 130, but the present disclosure is not limited to this. For example, the information processing device 100 may communicate with another computer that stores the management information 130. In this case, for example, the information processing device 100 determines whether or not a valid existing token related to the object account in the object BC 120 is present by communicating with the another computer that stores the management information 130.

Here, the case has been described where the information processing device 100 controls the object BC 120 so as to issue a valid new token related to the object account, but the present disclosure is not limited to this. For example, the information processing device 100 may issue a valid new token related to the object account. In this case, for example, the information processing device 100 controls the object BC 120 so as to store a valid new token related to the object account in the object BC 120 by transmitting the valid new token related to the object account to the object BC 120.

### (Example of Linkage Processing System 200)

Next, an example of a linkage processing system 200 to which the information processing device 100 illustrated in FIG. 1 is applied is described with reference to FIG. 2.

FIG. 2 is an explanatory diagram illustrating an example of the linkage processing system 200. In FIG. 2, the linkage processing system 200 includes one or more information processing devices 100, one or more client devices 210, one or more linkage control devices 240, one or more linkage BCs 220, and a plurality of linkage destination BCs 230. The linkage BC 220 includes one or more linkage BC nodes 250. The linkage destination BC 230 includes one or more linkage destination BC nodes 260.

In the linkage processing system 200, the information processing devices 100 are coupled to each other via a wired or wireless network 201. The network 201 is, for example, a local area network (LAN), a wide area network (WAN), the Internet, or the like. Furthermore, in the linkage processing system 200, the information processing device 100 and the linkage control device 240 are coupled via the wired or wireless network 201.

Furthermore, in the linkage processing system 200, the information processing device 100 and the linkage BC 220 are coupled via the wired or wireless network 201. Furthermore, in the linkage processing system 200, the information processing device 100 and the linkage destination BCs 230 are coupled via the wired or wireless network 201. Furthermore, in linkage processing system 200, the information processing device 100 and the client device 210 are coupled via the wired or wireless network 201.

Furthermore, in the linkage processing system 200, the linkage control device 240 and the linkage BC 220 are coupled via the wired or wireless network 201. Furthermore, in the linkage processing system 200, the linkage control device 240 and the linkage destination BCs 230 are coupled via the wired or wireless network 201.

The client device 210 is a computer that transmits, to the linkage control device 240, a linkage execution request that requests to start a series of processing of linking the plurality of linkage destination BCs 230. The client device 210 generates the linkage execution request based on, for example, an operation input of a user, and transmits the linkage execution request to the linkage control device 240. The linkage execution request includes, for example, a linkage execution identifier (ID) for identifying the linkage execution request. The linkage execution request includes, for example, a parameter that defines content of the series of processing related to the linkage. The client device 210 is, for example, a PC, a tablet terminal, a smartphone, or the like.

The linkage control device 240 is a computer for linking the plurality of linkage destination BCs 230. The linkage control device 240 receives a linkage execution request from the client device 210. Based on the linkage execution request, the linkage control device 240 transmits, to the linkage BC node 250 included in the linkage BC 220, a linkage start Tx that requests start of the series of processing of linking the plurality of linkage destination BCs 230.

The linkage control device 240 receives, from the linkage BC node 250, a processing request that requests execution of first processing in the series of processing. The processing request indicates, for example, the object linkage destination BC 230 related to the first processing and an object account related to the first processing in the object linkage destination BC 230.

The linkage control device 240 executes the first processing using the object linkage destination BC 230. For example, the linkage control device 240 completes the first processing by causing the object linkage destination BC 230 to record a Tx related to the first processing. Specifically, the linkage control device 240 transmits, to the information processing device 100, a Tx creation request that requests creation of a Tx related to the first processing. The Tx creation request indicates, for example, the object linkage destination BC 230 related to the first processing and the object account related to the first processing in the object linkage destination BC 230.

Specifically, the linkage control device 240 receives, from the information processing device 100, a Tx related to the first processing. Specifically, the linkage control device 240 transmits the received Tx to the object linkage destination BC node 260, and causes the object linkage destination BC 230 to record the Tx. When the linkage control device 240 causes the object linkage destination BC 230 to record the Tx related to the first processing, the linkage control device 240 generates an execution completion Tx representing that the first processing is completed, transmits the execution completion Tx to the linkage BC node 250, and causes the linkage BC 220 to record the execution completion Tx.

The linkage control device 240 receives, from the linkage BC node 250, a processing request that requests execution of the next processing in the series of processing. The processing request indicates, for example, the object linkage destination BC 230 related to the next processing and an object account related to the next processing in the object linkage destination BC 230.

The linkage control device 240 executes the next processing using the object linkage destination BC 230. For example, the linkage control device 240 completes the next processing by causing the object linkage destination BC 230 to record a Tx related to the next processing. Specifically, the linkage control device 240 transmits, to the information processing device 100, a Tx creation request that requests creation of a Tx related to the next processing. The Tx creation request indicates, for example, the object linkage destination BC 230 related to the next processing and the object account related to the next processing in the object linkage destination BC 230.

Specifically, the linkage control device 240 receives, from the information processing device 100, a Tx related to the next processing. Specifically, the linkage control device 240 transmits the received Tx to the object linkage destination BC node 260, and causes the object linkage destination BC 230 to record the Tx. When the linkage control device 240 causes the object linkage destination BC 230 to record the Tx related to the next processing, the linkage control device 240 generates an execution completion Tx representing that the next processing is completed, transmits the execution completion Tx to the linkage BC node 250, and causes the linkage BC 220 to record the execution completion Tx. The linkage control device 240 is, for example, a server, a PC, or the like.

The linkage BC node 250 is a computer that forms the linkage BC 220 and manages the distributed ledger. In the linkage BC node 250, for example, logic called a smart contract is deployed.

The linkage BC node 250 receives the linkage start Tx from the linkage control device 240. When the linkage start Tx is received, the linkage BC node 250 transmits, to the linkage control device 240, a processing request that requests execution of the first processing in the series of processing by the smart contract. The linkage BC node 250 records the received linkage start Tx in the linkage BC 220.

The linkage BC node 250 receives the execution completion Tx from the linkage control device 240. When the execution completion Tx is received, the linkage BC node 250 transmits, to the linkage control device 240, a processing request that requests execution of processing next to the processing completed this time in the series of processing by the smart contract. The linkage BC node 250 records the received execution completion Tx in the linkage BC 220. The linkage BC node 250 is, for example, a server, a PC, or the like.

The information processing device 100 is a computer that has a function of creating a Tx. The information processing device 100 includes a token ID cache. The token ID cache stores a token ID for identifying a valid token corresponding to each of one or more accounts in the linkage destination BC 230. The token ID cache includes, for example, correspondence information in which a public key ID for identifying an account is associated with a token ID for identifying a valid token corresponding to the account.

For example, information processing device 100 receives, from the linkage control device 240, a Tx creation request that requests creation of a Tx related to any processing of the series of processing. Based on the received Tx creation request, the information processing device 100 specifies the object linkage destination BC 230 related to the any processing, and specifies an object account in the object linkage destination BC 230. The information processing device 100 determines whether or not a valid token corresponding to the object account in the object linkage destination BC 230 is present with reference to the token ID cache.

In a case where the valid token is absent, the information processing device 100 creates a Tx related to the any processing of the series of processing in response to the Tx creation request. The information processing device 100 generates a signature corresponding to the object account, and adds the signature to the created Tx. The information processing device 100 controls the linkage destination BC node 260 so as to issue a valid new token. For example, the information processing device 100 transmits, to the linkage destination BC node 260, an issuance request that requests issuance of a valid new token. The information processing device 100 receives, from the linkage destination BC node 260, a token ID for identifying the transmitted valid new token. The information processing device 100 updates stored content of the token ID cache based on the received token ID. The information processing device 100 transmits, to the linkage control device 240, the Tx added with the signature corresponding to the object account.

In a case where the valid token is present, the information processing device 100 creates a Tx related to any processing of the series of processing in response to the Tx creation request, and transmits the Tx to the linkage control device 240. The information processing device 100 is, for example, a server, a PC, or the like.

The linkage destination BC node 260 is a computer that forms the linkage destination BC 230 and manages the distributed ledger. In the linkage destination BC node 260, for example, logic called a smart contract is deployed. The linkage destination BC node 260 issues a valid new token under the control of the information processing device 100. The linkage destination BC node 260 records the issued valid new token in the linkage BC 220 by the smart contract. The linkage destination BC node 260 issues a token ID for identifying the valid new token by the smart contract, and transmits the token ID to the information processing device 100.

The linkage destination BC node 260 receives a Tx from the linkage control device 240. When the Tx is added with a signature, the linkage destination BC node 260 verifies validity of the signature by the smart contract. The linkage destination BC node 260 determines whether or not a valid token corresponding to an object account related to the Tx is present by the smart contract. The linkage destination BC node 260 may determine whether or not a valid token corresponding to the object account related to the Tx is present without having the smart contract.

In a case where the Tx is added with the signature, the linkage destination BC node 260 records the Tx in the linkage BC 220 when the signature is valid and a valid token is present by the smart contract. In a case where the Tx is added with the signature, the linkage destination BC node 260 discards the Tx without recording the Tx in the linkage destination BC 230 in a case where the signature is not valid and a valid token is absent by the smart contract.

In a case where the Tx is not added with the signature, the linkage destination BC node 260 records the Tx in the linkage destination BC 230 when a valid token is present by the smart contract. The linkage destination BC node 260 is, for example, a server, a PC, or the like.

Here, the case has been described where one information processing device 100 has the function of generating a Tx and the function of controlling the linkage destination BC node 260 so as to issue a token, but the present disclosure is not limited to this. For example, there may be a first information processing device 100 having a function of generating a Tx and a second information processing device 100 having a function of controlling the linkage destination BC node 260 so as to issue a token. In this case, the first information processing device 100 transmits a Tx added with a signature to the second information processing device 100. The second information processing device 100 verifies validity of the signature, and controls, in a case where the signature is valid, the linkage destination BC node 260 so as to issue a token.

### (Application Example of Linkage Processing System 200)

Next, an application example of the linkage processing system 200 illustrated in FIG. 2 will be described with reference to FIG. 3.

FIG. 3 is an explanatory diagram illustrating the application example of the linkage processing system 200. In FIG. 3, the linkage processing system 200 may be applied to, for example, a service for trading securities. In the example of FIG. 3, there are a securities management BC 310 as the linkage destination BC 230 that manages securities and an account management BC 320 as the linkage destination BC 230 that manages accounts.

The securities management BC 310 records a securities account 311 of Alice and a securities account 312 of Bob. The account management BC 320 records a financial account 321 of Alice and a financial account 322 of Bob.

The linkage BC 220 includes a smart contract 301 and a linkage rule 302. The linkage rule 302 represents, for example, processing 1 of transferring C from a financial account of A to a financial account of B in the account management BC 320, and processing 2 of transferring D from a securities account of B to a securities account of A in the securities management BC 310 executed next to the processing 1. A, B, C, and D are parameters.

For example, the linkage control device 240 specifies A = Alice, B = Bob, C = 10ETH, and D = Asset0 for the linkage BC 220. Under the control of the linkage BC 220, the linkage control device 240 causes the account management BC 320 to record a Tx related to the processing 1 of transferring 10ETH from the financial account of Alice to the financial account of Bob. The Tx related to the processing 1 is generated by, for example, the information processing device 100.

Under the control of the linkage BC 220, the linkage control device 240 causes the securities management BC 310 to record a Tx related to the processing 2 of transferring Asset0 from the securities account of Bob to the securities account of Alice. The Tx related to the processing 2 is generated by, for example, the information processing device 100.

The linkage control device 240 monitors a block to be added to the distributed ledger in each of the linkage destination BCs 230. As a result, the linkage processing system 200 may implement a service for trading securities. The linkage processing system 200 may leave a trail of each processing in the series of processing.

### (Hardware Configuration Example of Information Processing Device 100)

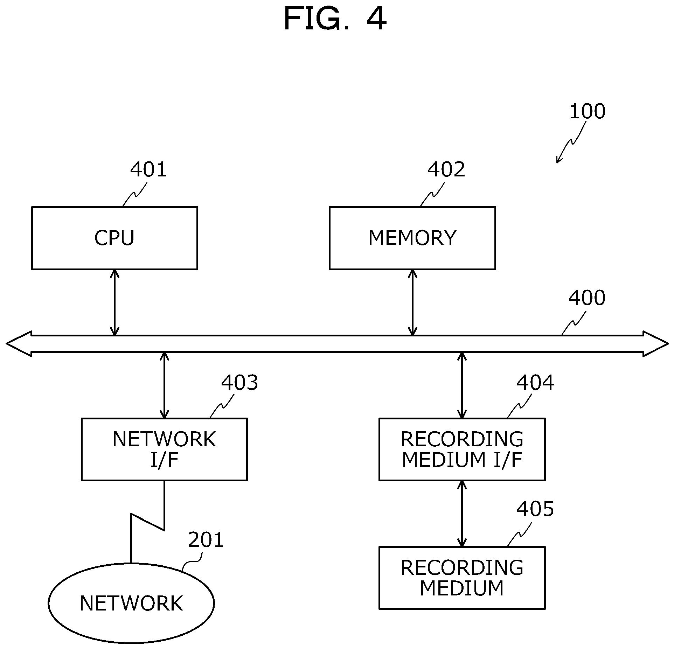

Next, a hardware configuration example of the information processing device 100 will be described with reference to FIG. 4.

FIG. 4 is a block diagram illustrating the hardware configuration example of the information processing device 100. In FIG. 4, the information processing device 100 includes a central processing unit (CPU) 401, a memory 402, a network interface (I/F) 403, a recording medium I/F 404, and a recording medium 405. Furthermore, the respective components are coupled to each other by a bus 400.

Here, the CPU 401 takes overall control of the information processing device 100. The memory 402 includes, for example, a read only memory (ROM), a random access memory (RAM), a flash ROM, and the like. Specifically, for example, the flash ROM or the ROM stores various programs, and the RAM is used as a work area for the CPU 401. The programs stored in the memory 402 are loaded into the CPU 401 to cause the CPU 401 to execute coded processing.

The network I/F 403 is coupled to the network 201 through a communication line, and is coupled to another computer via the network 201. Additionally, the network I/F 403 takes control of an interface between the network 201 and the inside, and controls input and output of data from and to another computer. The network I/F 403 is, for example, a modem, a LAN adapter, or the like.

The recording medium I/F 404 controls reading and writing of data from and to the recording medium 405 under the control of the CPU 401. The recording medium I/F 404 is, for example, a disk drive, a solid state drive (SSD), a universal serial bus (USB) port, or the like. The recording medium 405 is a nonvolatile memory that stores data written under the control of the recording medium I/F 404. The recording medium 405 is, for example, a disk, a semiconductor memory, a USB memory, or the like. The recording medium 405 may be attachable to and detachable from the information processing device 100.

The information processing device 100 may include, for example, a keyboard, a mouse, a display, a printer, a scanner, a microphone, a speaker, or the like in addition to the components described above. Furthermore, the information processing device 100 may include a plurality of the recording medium I/Fs 404 and the recording media 405. Furthermore, the information processing device 100 does not have to include the recording medium I/F 404 or the recording medium 405.

### (Hardware Configuration Example of Client Device 210)

Specifically, since a hardware configuration example of the client device 210 is similar to the hardware configuration example of the information processing device 100 illustrated in FIG. 4, description thereof is omitted.

### (Hardware Configuration Example of Linkage Control Device 240)

Specifically, since a hardware configuration example of the linkage control device 240 is similar to the hardware configuration example of the information processing device 100 illustrated in FIG. 4, description thereof is omitted.

### (Hardware Configuration Example of Linkage BC Node 250)

Specifically, since a hardware configuration example of the linkage BC node 250 is similar to the hardware configuration example of the information processing device 100 illustrated in FIG. 4, description thereof is omitted.

### (Hardware Configuration Example of Linkage Destination BC Node 260)

Specifically, since a hardware configuration example of the linkage destination BC node 260 is similar to the hardware configuration example of the information processing device 100 illustrated in FIG. 4, description thereof is omitted.

### (Functional Configuration Example of Information Processing Device 100)

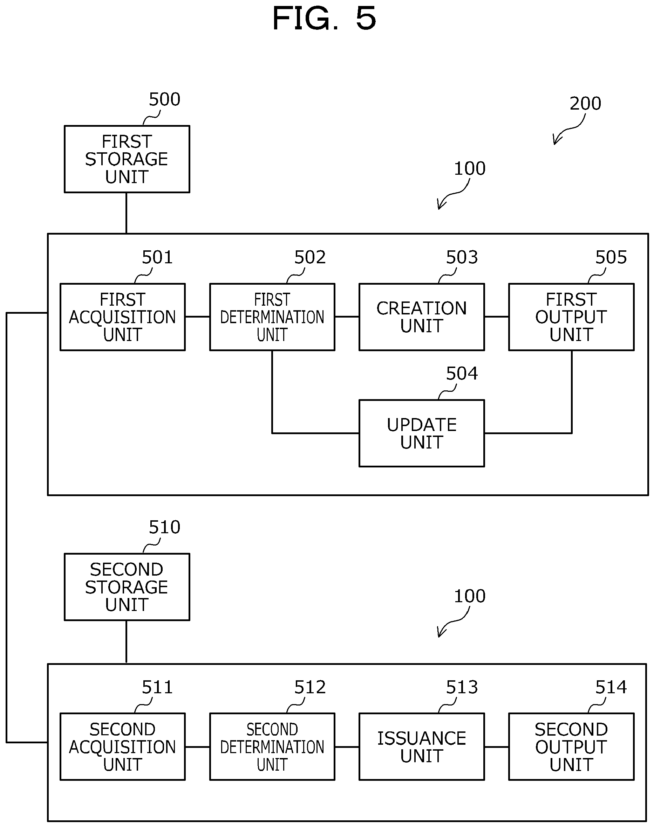

Next, a functional configuration example of the information processing device 100 will be described with reference to FIG. 5.

FIG. 5 is a block diagram illustrating the functional configuration example of the information processing device 100. In the example of FIG. 5, specifically, the functional configuration example of each information processing device 100 in a case where the first information processing device 100 and the second information processing device 100 cooperate will be described.

The first information processing device 100 includes a first storage unit 500, a first acquisition unit 501, a first determination unit 502, a creation unit 503, an update unit 504, and a first output unit 505. The second information processing device 100 includes a second storage unit 510, a second acquisition unit 511, a second determination unit 512, an issuance unit 513, and a second output unit 514.

The first storage unit 500 is implemented by, for example, a storage area such as the memory 402 or the recording medium 405 illustrated in FIG. 4. Hereinafter, a case will be described where the first storage unit 500 is included in the information processing device 100, but the present disclosure is not limited to this. For example, the first storage unit 500 may be included in a device different from the information processing device 100, and stored content of the first storage unit 500 may be referred to by the information processing device 100.

The first acquisition unit 501 to the first output unit 505 function as an example of a control unit. Specifically, for example, the first acquisition unit 501 to the first output unit 505 implement functions thereof by causing the CPU 401 to execute a program stored in a storage area such as the memory 402 or the recording medium 405 or by the network I/F 403, illustrated in FIG. 4. A processing result of each functional unit is stored in, for example, a storage area such as the memory 402 or the recording medium 405 illustrated in FIG. 4.

The first storage unit 500 stores various types of information referred or updated in processing of each functional unit. The first storage unit 500 stores, for example, management information. The management information represents, for example, presence or absence of a valid token related to each of one or more accounts in an object BC. The management information includes, specifically, correspondence information in which an identifier for identifying each account is associated with an identifier for identifying a valid token related to the account.

A valid condition may be set for the token. The management information may include, for example, correspondence information in which an identifier for identifying each account, an identifier for identifying a token related to the account, and a condition under which the token is valid are associated with each other. The valid condition is, for example, any timing after the token is issued, the number of times a Tx corresponding to the account related to the token is recorded in the linkage destination BC 230 after the token is issued, or the like. The management information is updated by, for example, the update unit 504.

The first acquisition unit 501 acquires various types of information used for processing of each functional unit. The first acquisition unit 501 stores the acquired various types of information in the first storage unit 500 or outputs the acquired various types of information to each functional unit. Furthermore, the first acquisition unit 501 may output the various types of information stored in the first storage unit 500 to each functional unit. The first acquisition unit 501 acquires the various types of information based on, for example, an operation input of a user. The first acquisition unit 501 may receive the various types of information from, for example, a device different from the information processing device 100.

For example, the first acquisition unit 501 receives, from the linkage unit that links between BCs, a processing request that requests generation of a Tx for an object account in an object BC. The linkage unit exists, for example, in another computer different from the first information processing device 100 and the second information processing device 100. Specifically, the linkage unit is the linkage control device 240. The linkage unit has a function of transmitting the received Tx to the object BC. The object BC has a function of executing the Tx in a case where a valid token is present when the Tx is received.

The processing request indicates, for example, the object BC and the object account in the object BC. Specifically, the processing request includes an identifier for identifying the object BC and an identifier for identifying the object account. The identifier for identifying the object account is, for example, a public key ID corresponding to the object account.

The first acquisition unit 501 may accept a start trigger to start processing of any one of the functional units. The start trigger is, for example, a predetermined operation input by a user. The start trigger may be, for example, reception of predetermined information from another computer. The start trigger may be, for example, output of predetermined information from any one of the functional units. The first acquisition unit 501 accepts, for example, reception of the processing request as a start trigger to start processing of the first determination unit 502, the creation unit 503, and the update unit 504.

The first determination unit 502 determines whether or not a valid existing token related to an object account in an object BC is present based on the management information and a received processing request. For example, the first determination unit 502 specifies the object BC and the object account based on the received processing request. For example, the first determination unit 502 determines whether or not a valid existing token related to the specified object account in the specified object BC is present based on the management information. As a result, the first determination unit 502 may determine whether or not the linkage unit is in a situation where the linkage unit may transmit a Tx to the object BC, and may determine whether or not it is unnecessary to issue a valid new token.

For example, when there is a condition under which a token related to the specified object account in the specified object BC is valid based on the management information, the first determination unit 502 may determine whether or not the condition is satisfied. For example, in a case where it is determined that the condition is satisfied, the first determination unit 502 determines that a valid existing token related to the specified object account in the specified object BC is present. For example, in a case where it is determined that the condition is not satisfied, the first determination unit 502 determines that a valid existing token related to the specified object account in the specified object BC is absent. As a result, the first determination unit 502 may determine whether or not the linkage unit is in a situation where the linkage unit may transmit a Tx to the object BC, and may determine whether or not it is unnecessary to issue a valid new token.

The creation unit 503 generates a signature related to an object account in a case where the first determination unit 502 determines that an existing token is absent. The signature is an electronic signature. The creation unit 503 generates the signature related to the object account using, for example, a secret key corresponding to the object account. The creation unit 503 generates a first Tx for the object account in an object BC, which is added with the generated signature. As a result, the creation unit 503 may generate the Tx to be transmitted to the object BC by the linkage unit. The creation unit 503 may secure reliability of the Tx and reliability of a token with the signature.

The creation unit 503 generates a second Tx for the object account in the object BC in a case where the first determination unit 502 determines that an existing token is present. As a result, the creation unit 503 may generate the Tx to be transmitted to the object BC by the linkage unit. Therefore, the creation unit 503 may enable the linkage unit to appropriately control the plurality of linkage destination BCs 230.

The update unit 504 controls, in a case where it is determined that an existing token is absent, an object BC so as to store a valid new token related to an object account in the object BC. The update unit 504 controls the object BC so as to store a new token via, for example, the second information processing device 100.

The update unit 504 includes, for example, a first Tx added with a signature generated by the creation unit 503, and transmits, to the second information processing device 100, an issuance request that requests issuance of a valid new token related to the object account in the object BC. The issuance request indicates, for example, the object BC and the object account in the object BC. Specifically, the issuance request includes an identifier for identifying the object BC and an identifier for identifying the object account. The identifier for identifying the object account is, for example, a public key ID corresponding to the object account. As a result, the update unit 504 may cause the object BC to store a valid new token, and may enable the object BC to accept the first Tx or a second Tx generated by the creation unit 503.

The update unit 504 updates the management information when the object BC is controlled so as to store a valid new token related to the object account in the object BC. For example, as a result of controlling the object BC so as to store a new token via the second information processing device 100, the update unit 504 receives an identifier for identifying the new token from the object BC. The update unit 504 updates the management information based on, for example, the received identifier for identifying the new token. As a result, the update unit 504 may enable appropriate determination of presence or absence of a valid token related to the object account in the object BC without communicating with the object BC thereafter.

The first output unit 505 outputs a processing result of at least any one of the functional units. An output format is, for example, display on a display, a print output to a printer, transmission to an external device by the network I/F 403, or storage in a storage area such as the memory 402 or the recording medium 405. As a result, the first output unit 505 may enable a user to be notified of a processing result of at least any one of the functional units, and may improve convenience of the information processing device 100.

The first output unit 505 returns a first Tx generated in the creation unit 503 to the linkage unit. As a result, the first output unit 505 may enable transmission of the first Tx generated in the creation unit 503 from the linkage unit to an object BC. The first output unit 505 may enable the linkage unit to appropriately control the plurality of linkage destination BCs 230, and may enable the linkage unit to appropriately execute a series of processing.

The first output unit 505 returns a second Tx generated in the creation unit 503 to the linkage unit. As a result, the first output unit 505 may transmit the first Tx generated in the creation unit 503 from the linkage unit to the object BC. The first output unit 505 may enable the linkage unit to appropriately control the plurality of linkage destination BCs 230, and may enable the linkage unit to appropriately execute a series of processing.

The linkage unit transmits, to the object BC, the received first Tx or the received second Tx, for example. The object BC executes the first Tx or the second Tx in a case where, for example, a valid token is present when the first Tx or the second Tx is received.

The second storage unit 510 is implemented by, for example, a storage area such as the memory 402 or the recording medium 405 illustrated in FIG. 4. Hereinafter, a case will be described where the second storage unit 510 is included in the information processing device 100, but the present disclosure is not limited to this. For example, the second storage unit 510 may be included in a device different from the information processing device 100, and stored content of the second storage unit 510 may be referred to by the information processing device 100.

The second acquisition unit 511 to the second output unit 514 function as an example of the control unit. Specifically, for example, the second acquisition unit 511 to the second output unit 514 implement functions thereof by causing the CPU 401 to execute a program stored in a storage area such as the memory 402 or the recording medium 405 or by the network I/F 403, illustrated in FIG. 4. A processing result of each functional unit is stored in, for example, a storage area such as the memory 402 or the recording medium 405 illustrated in FIG. 4.

The second storage unit 510 stores various types of information referred or updated in processing of each functional unit. The second storage unit 510 stores, for example, a public key corresponding to each of one or more accounts in an object BC. The public key is acquired by, for example, the second acquisition unit 511.

The second acquisition unit 511 acquires various types of information used for processing of each functional unit. The second acquisition unit 511 stores the acquired various types of information in the second storage unit 510 or outputs the acquired various types of information to each functional unit. Furthermore, the second acquisition unit 511 may output the various types of information stored in the second storage unit 510 to each functional unit. The second acquisition unit 511 acquires the various types of information based on, for example, an operation input of a user. The second acquisition unit 511 may receive the various types of information from, for example, a device different from the information processing device 100.

For example, the second acquisition unit 511 receives, from the first information processing device 100, an issuance request that requests issuance of a valid new token related to an object account in an object BC. The issuance request includes, for example, a first Tx added with a signature. The issuance request indicates, for example, the object BC and the object account in the object BC. Specifically, the processing request includes an identifier for identifying the object BC and an identifier for identifying the object account. The identifier for identifying the object account is, for example, a public key ID corresponding to the object account.

The second acquisition unit 511 acquires, for example, a public key corresponding to the object account in the object BC. Specifically, the second acquisition unit 511 communicates with the linkage BC 220 based on the public key ID corresponding to the object account, and acquires the public key corresponding to the object account in the object BC by receiving the public key from the linkage BC 220.

The second acquisition unit 511 may accept a start trigger to start processing of any one of the functional units. The start trigger is, for example, a predetermined operation input by a user. The start trigger may be, for example, reception of predetermined information from another computer. The start trigger may be, for example, output of predetermined information from any one of the functional units. The second acquisition unit 511 accepts, for example, reception of the issuance request as a start trigger to start processing of the second determination unit 512 and the issuance unit 513.

The second determination unit 512 verifies validity of a signature added to a first Tx. The second determination unit 512 verifies the validity of the signature added to the first Tx based on, for example, a public key corresponding to an object account. As a result, the second determination unit 512 may determine whether or not a new token may be issued. The second determination unit 512 may facilitate avoidance of a situation where a new token is illegally issued.

The issuance unit 513 controls an object BC so as to issue a valid new token in a case where the second determination unit 512 determines that a signature is valid. For example, the issuance unit 513 transmits, to the object BC, an issuance request that requests issuance of a valid new token in a case where the second determination unit 512 determines that the signature is valid. As a result, the issuance unit 513 may issue a token to be recorded in the object BC in the object BC. The issuance unit 513 may facilitate avoidance of a situation where a valid new token is illegally issued.

The second output unit 514 outputs a processing result of at least any one of the functional units. An output format is, for example, display on a display, a print output to a printer, transmission to an external device by the network I/F 403, or storage in a storage area such as the memory 402 or the recording medium 405. As a result, the second output unit 514 may enable a user to be notified of a processing result of at least any one of the functional units, and may improve convenience of the information processing device 100.

For example, the second output unit 514 transmits, to the first information processing device 100, a result of controlling the object BC by the issuance unit 513 so as to issue a valid new token. As a result, the second output unit 514 may enable the first information processing device 100 to grasp that the object BC has been controlled so as to issue a valid new token.

The object BC may store an account that is allowed to be an object to which a token is issued. The object BC issues a new token in a case where an object account is an account that is allowed to be an object to which a token is issued. For example, the object BC issues a new token in response to an issuance request in a case where the object account is an account that is allowed to be an object to which a token is issued. The object BC does not have to issue a new token in a case where the object account is not an account that is allowed to be an object to which a token is issued.

The object BC may store the information processing device 100 that is allowed to be an issuance source that issues a token. The object BC issues a new token in a case where the second information processing device 100 is the information processing device 100 that is allowed to be an issuance source that issues a token. For example, the object BC issues a new token in response to an issuance request in a case where the second information processing device 100 is the information processing device 100 that is allowed to be an issuance source that issues a token. The object BC does not have to issue a new token in a case where the second information processing device 100 is not the information processing device 100 that is allowed to be an issuance source that issues a token.

In a case where the issuance source that issues a token and the object to which a token is issued are the same, the object BC does not have to issue a new token.

Here, the case has been described where the first information processing device 100 and the second information processing device 100 cooperate, but the present disclosure is not limited to this. For example, one information processing device 100 may have the function of generating a Tx and the function of controlling an object BC so as to issue a token. Specifically, the first information processing device 100 may include the second acquisition unit 511, the issuance unit 513, and the second output unit 514.

### (First Operation Example of Information Processing Device 100)

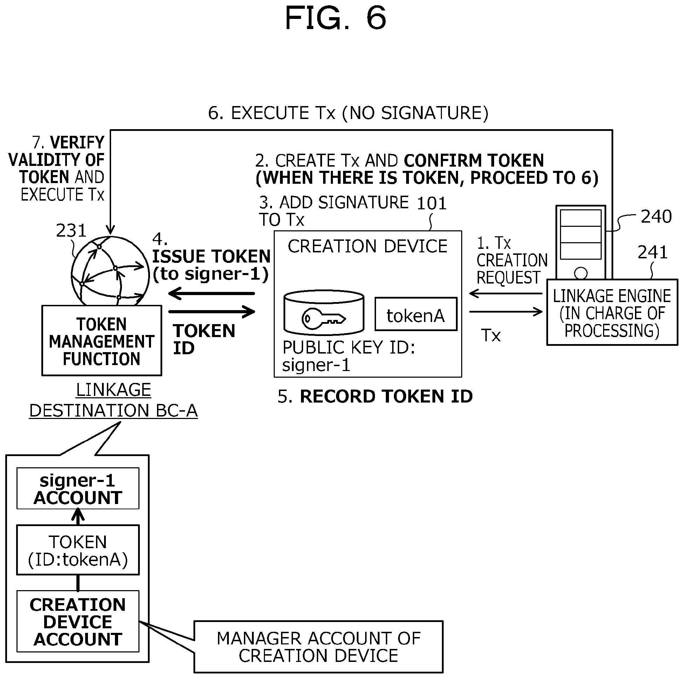

Next, a first operation example of the information processing device 100 will be described with reference to FIG. 6. The first operation example corresponds to a case where a single information processing device 100 generates a Tx and controls issuance of a token. In the following description, the single information processing device 100 that generates a Tx and controls issuance of a token may be referred to as a "creation device 101".

FIG. 6 is an explanatory diagram illustrating the first operation example of the information processing device 100. In FIG. 6, the linkage control device 240 includes a linkage engine 241. Furthermore, there is a linkage destination BC-A. In the following description, the linkage destination BC-A may be referred to as a "linkage destination BC 231".

The linkage destination BC 231 manages an account of an account of a signer1. Furthermore, the linkage destination BC 231 manages an account of an account of the creation device 101. Furthermore, the linkage destination BC 231 records the account of the signer1 as an account that is allowed to be an object to which a token is issued. Furthermore, the linkage destination BC 231 records the account of the creation device 101 as an account that is allowed to be an issuance source that issues a token.

The creation device 101 includes a cache file that records information indicating presence or absence of a valid token corresponding to each of one or more accounts in the linkage destination BC 231. The cache file includes, for example, correspondence information in which a public key ID for identifying an account is associated with a token ID for identifying a valid token corresponding to the account.

For example, a valid condition may be set for the token. The valid condition is, for example, a condition related to a period, the number of times of execution of a Tx in the linkage destination BC 231, a data amount of the Tx executed in the linkage destination BC 231, or the like. The correspondence information may include, for example, the condition set for the token.

(6-1) The linkage engine 241 transmits a Tx creation request to the creation device 101. When the Tx creation request is received, the creation device 101 specifies the linkage destination BC 231 and specifies the account of the signer1 that is an object to which a token is issued. The creation device 101 specifies a public key ID corresponding to the specified account of the signer1.

(6-2) The creation device 101 generates a Tx for the specified account of the signer1. The creation device 101 determines whether or not a valid token corresponding to the specified account of the signer1 is present.

For example, in a case where there is no token ID corresponding to the specified public key ID in the cache file, the creation device 101 determines that a valid token corresponding to the specified account of the signer1 is absent. For example, in a case where there is a token ID corresponding to the specified public key ID in the cache file, the creation device 101 determines that there is a valid token corresponding to the specified account of the signer1.

For example, in a case where there is a token ID corresponding to the specified public key ID in the cache file and there is a condition set for the token, the creation device 101 may determine whether or not the condition is satisfied. For example, in a case where it is determined that the condition is not satisfied, the creation device 101 determines that a valid token corresponding to the specified account of the signer1 is absent. For example, in a case where it is determined that the condition is satisfied, the creation device 101 determines that a valid token corresponding to the specified account of the signer1 is present.

Here, in a case where it is determined that a valid token is present, the creation device 101 omits processing of (6-3) to (6-5) described later, and transmits the generated Tx to the linkage engine 241. As a result, the creation device 101 may reduce a time needed from reception of the Tx creation request to transmission of the generated Tx to the linkage engine 241, in a case where it is determined that a valid token is present. Therefore, the creation device 101 may reduce a time needed from transmission of the Tx creation request by the linkage engine 241 to transmission of the Tx to the linkage destination BC 231.

(6-3) In a case where it is determined that a valid token is absent, the creation device 101 generates a signature for the generated Tx based on a secret key corresponding to the specified account of the signer1. The creation device 101 adds the generated signature to the generated Tx.

(6-4) The creation device 101 controls the linkage destination BC 231 so as to issue a valid new token corresponding to the specified account of the signer1. For example, the creation device 101 transmits, to the linkage destination BC 231, an issuance request that requests issuance of a new token in association with the specified account of the signer1. The issuance request may include, for example, the account of the signer1.

The linkage destination BC 231 issues a new token associated with the account of the signer1 in response to the issuance request. The linkage destination BC 231 adds a token ID to the token associated with the account of the signer1. The linkage destination BC 231 records the token associated with the account of the signer1 added with the token ID in the distributed ledger. The linkage destination BC 231 transmits, to the creation device 101, the token ID added to the token associated with the account of the signer1.

At this time, the linkage destination BC 231 may determine whether or not to issue a token and record the token in the distributed ledger based on an account that is allowed to be an object to which a token is issued and an account that is allowed to be an issuance source that issues a token. In the example of FIG. 6, since the account of the signer1 is allowed as an object to which a token is issued and the account of the creation device 101 is allowed as an issuance source that issues a token, the linkage destination BC 231 issues a token and records the token in the distributed ledger.

(6-5) The creation device 101 receives, from the linkage destination BC 231, the token ID added to the token associated with the account of the signer1. The creation device 101 updates the cache file based on the received token ID. As a result, the creation device 101 may enable appropriate determination of presence or absence of a valid token corresponding to the account of the signer1 thereafter. Thereafter, the creation device 101 transmits the generated Tx to the linkage engine 241.

(6-6) The linkage engine 241 receives the Tx from the creation device 101. The linkage engine 241 transmits the received Tx to the linkage destination BC 231 to cause the linkage destination BC 231 to execute the received Tx. A signature does not have to be added to the Tx.

(6-7) The linkage destination BC 231 receives the Tx from the linkage engine 241. The linkage destination BC 231 determines whether or not a valid token corresponding to the account of the signer1 corresponding to the received Tx is present. In a case where it is determined that a valid token is absent, the linkage destination BC 231 discards the received Tx without execution. In a case where it is determined that a valid token is present, the linkage destination BC 231 records the received Tx in the distributed ledger by executing the received Tx.

As a result, the creation device 101 may disenable generation of a signature and a token only with the linkage engine 241, and may facilitate avoidance of an attack by the linkage engine 241 on the linkage processing system 200. By causing the linkage destination BC 231 to record the token, the creation device 101 may omit the processing of generating a signature when a Tx is generated thereafter. Therefore, the creation device 101 may reduce a time needed from transmission of the Tx creation request by the linkage engine 241 to transmission of the Tx to the linkage destination BC 231.

### (Second Operation Example of Information Processing Device 100)

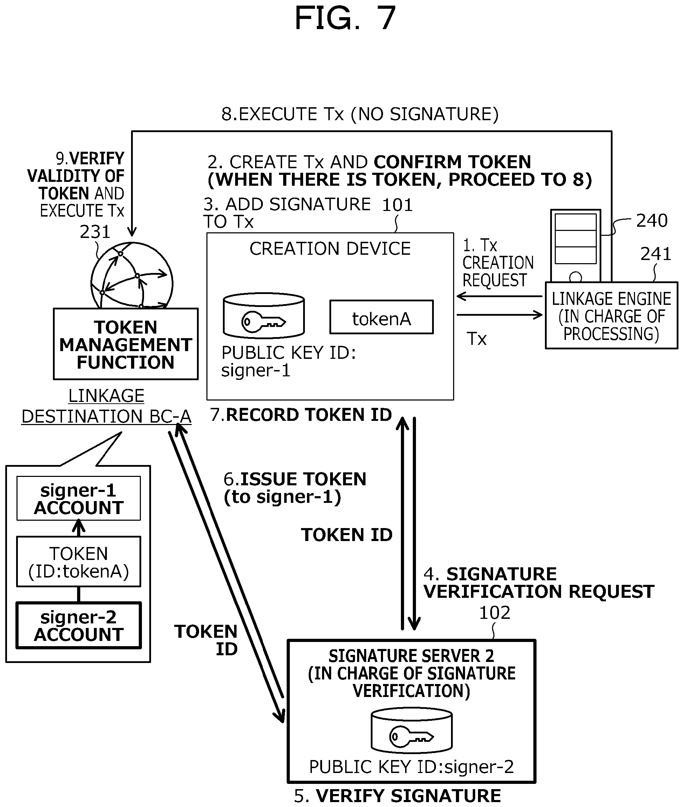

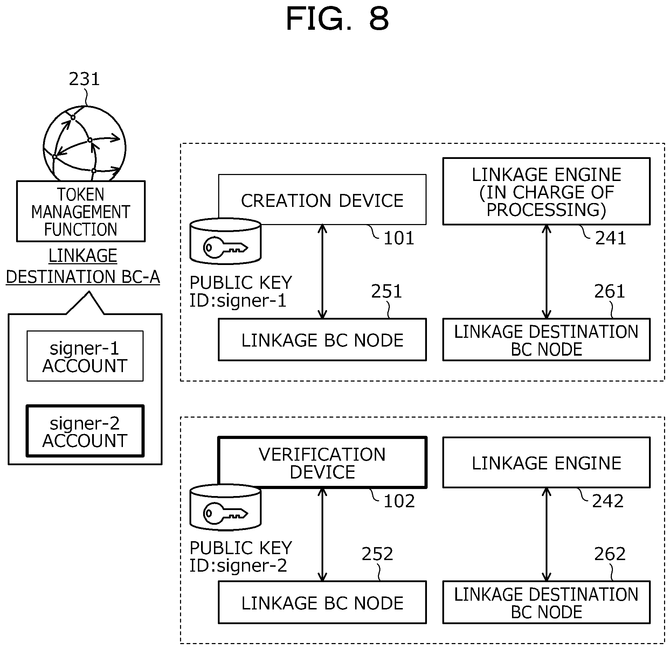

Next, a second operation example of the information processing device 100 will be described with reference to FIGs. 7 and 8. The second operation example corresponds to a case where the first information processing device 100 that generates a Tx and the second information processing device 100 that controls issuance of a token cooperate. In the following description, the first information processing device 100 that generates a Tx may be referred to as the "creation device 101". Furthermore, in the following description, the second information processing device 100 that controls issuance of a token may be referred to as a "verification device 102".

FIGs. 7 and 8 are explanatory diagrams illustrating the second operation example of the information processing device 100. In FIG. 7, the linkage control device 240 includes the linkage engine 241. Furthermore, there is the linkage destination BC-A. In the following description, the linkage destination BC-A may be referred to as the "linkage destination BC 231".

The linkage destination BC 231 manages the account of the account of the signer1. Furthermore, the linkage destination BC 231 manages an account of an account of the verification device 102. Furthermore, the linkage destination BC 231 records the account of the signer1 as an account that is allowed to be an object to which a token is issued. Furthermore, the linkage destination BC 231 records the account of the verification device 102 as an account that is allowed to be an issuance source that issues a token.

The creation device 101 includes the cache file that records the information indicating presence or absence of a valid token corresponding to each of one or more accounts in the linkage destination BC 231. The cache file includes, for example, correspondence information in which a public key ID for identifying an account is associated with a token ID for identifying a valid token corresponding to the account.

For example, a valid condition may be set for the token. The valid condition is, for example, a condition related to a period, the number of times of execution of a Tx in the linkage destination BC 231, a data amount of the Tx executed in the linkage destination BC 231, or the like. The correspondence information may include, for example, the condition set for the token.

(7-1) The linkage engine 241 transmits a Tx creation request to the creation device 101. When the Tx creation request is received, the creation device 101 specifies the linkage destination BC 231 and specifies the account of the signer1 that is an object to which a token is issued. The creation device 101 specifies a public key ID corresponding to the specified account of the signer1.

(7-2) The creation device 101 generates a Tx for the specified account of the signer1. The creation device 101 determines whether or not a valid token corresponding to the specified account of the signer1 is present.

For example, in a case where there is no token ID corresponding to the specified public key ID in the cache file, the creation device 101 determines that a valid token corresponding to the specified account of the signer1 is absent. For example, in a case where there is a token ID corresponding to the specified public key ID in the cache file, the creation device 101 determines that there is a valid token corresponding to the specified account of the signer1.

For example, in a case where there is a token ID corresponding to the specified public key ID in the cache file and there is a condition set for the token, the creation device 101 may determine whether or not the condition is satisfied. For example, in a case where it is determined that the condition is not satisfied, the creation device 101 determines that a valid token corresponding to the specified account of the signer1 is absent. For example, in a case where it is determined that the condition is satisfied, the creation device 101 determines that a valid token corresponding to the specified account of the signer1 is present.

Here, in a case where it is determined that a valid token is present, the creation device 101 omits processing of (7-3) to (7-7) described later, and transmits the generated Tx to the linkage engine 241. As a result, the creation device 101 may reduce a time needed from reception of the Tx creation request to transmission of the generated Tx to the linkage engine 241, in a case where it is determined that a valid token is present. Therefore, the creation device 101 may reduce a time needed from transmission of the Tx creation request by the linkage engine 241 to transmission of the Tx to the linkage destination BC 231.

(7-3) In a case where it is determined that a valid token is absent, the creation device 101 generates a signature for the generated Tx based on a secret key corresponding to the specified account of the signer1. The creation device 101 adds the generated signature to the generated Tx.

(7-4) The creation device 101 generates a signature verification request including the Tx added with the signature, and transmits the signature verification request to the verification device 102.

(7-5) Based on the signature verification request, the verification device 102 specifies the linkage destination BC 231 and specifies the account of the signer1 that is an object to which a token is issued. The verification device 102 specifies the public key ID corresponding to the specified account of the signer1. The verification device 102 acquires a public key corresponding to the account of the signer1 based on the specified public key ID. The verification device 102 verifies validity of the signature added to the received Tx based on the public key corresponding to the account of the signer1.

(7-6) In a case where it is determined that the signature is not valid, the verification device 102 determines not to issue a token. In a case where it is determined that the signature is valid, the verification device 102 controls the linkage destination BC 231 so as to issue a valid new token corresponding to the specified account of the signer1. For example, the verification device 102 transmits, to the linkage destination BC 231, an issuance request that requests issuance of a new token in association with the specified account of the signer1. The issuance request may include, for example, the account of the signer1.

The linkage destination BC 231 issues a new token associated with the account of the signer1 in response to the issuance request. The linkage destination BC 231 adds a token ID to the token associated with the account of the signer1. The linkage destination BC 231 records the token associated with the account of the signer1 added with the token ID in the distributed ledger. The linkage destination BC 231 transmits, to the verification device 102, the token ID added to the token associated with the account of the signer1. The verification device 102 transmits the received token ID to the creation device 101.

At this time, the linkage destination BC 231 may determine whether or not to issue a token and record the token in the distributed ledger based on an account that is allowed to be an object to which a token is issued and an account that is allowed to be an issuance source that issues a token. In the example of FIG. 7, since the account of the signer1 is allowed as an object to which a token is issued and the account of the verification device 102 is allowed as an issuance source that issues a token, the linkage destination BC 231 issues a token and records the token in the distributed ledger.

(7-7) The creation device 101 receives, from the verification device 102, the token ID added to the token associated with the account of the signer1. The creation device 101 updates the cache file based on the received token ID. As a result, the creation device 101 may enable appropriate determination of presence or absence of a valid token corresponding to the account of the signer1 thereafter. Thereafter, the creation device 101 transmits the generated Tx to the linkage engine 241.

(7-8) The linkage engine 241 receives the Tx from the creation device 101. The linkage engine 241 transmits the received Tx to the linkage destination BC 231 to cause the linkage destination BC 231 to execute the received Tx. A signature does not have to be added to the Tx.

(7-9) The linkage destination BC 231 receives the Tx from the linkage engine 241. The linkage destination BC 231 determines whether or not a valid token corresponding to the account of the signer1 corresponding to the received Tx is present. In a case where it is determined that a valid token is absent, the linkage destination BC 231 discards the received Tx without execution. In a case where it is determined that a valid token is present, the linkage destination BC 231 records the received Tx in the distributed ledger by executing the received Tx.

As a result, the creation device 101 may disenable generation of a signature and a token only with the linkage engine 241, and may facilitate avoidance of an attack by the linkage engine 241 on the linkage processing system 200. By causing the linkage destination BC 231 to record the token, the creation device 101 may omit the processing of generating a signature when a Tx is generated thereafter. Therefore, the creation device 101 may reduce a time needed from transmission of the Tx creation request by the linkage engine 241 to transmission of the Tx to the linkage destination BC 231. Next, description of FIG. 8 will be made.

As illustrated in FIG. 8, the information processing device 100 may be prepared for each of the linkage engine 241 and a linkage engine 242 included in the linkage control devices 240 different from each other. The information processing device 100 corresponding to the linkage engine 241 operates as, for example, the creation device 101 illustrated in FIG. 7. The information processing device 100 corresponding to the linkage engine 241 may also operate as, for example, the verification device 102 illustrated in FIG. 7. The information processing device 100 corresponding to the linkage engine 242 operates as, for example, the verification device 102 illustrated in FIG. 7. The information processing device 100 corresponding to the linkage engine 242 may also operate as, for example, the creation device 101 illustrated in FIG. 7.

The linkage BC node 250 may be associated with each of the linkage engines 241 and 242. For example, there is a linkage BC node 251 corresponding to the linkage engine 241. There is a linkage BC node 252 corresponding to the linkage engine 242. The linkage destination BC node 260 may be associated with each of the linkage engines 241 and 242. For example, there is a linkage destination BC node 261 corresponding to the linkage engine 241. There is a linkage destination BC node 262 corresponding to the linkage engine 242.

### (Specific Example of Information Processing Device 100)

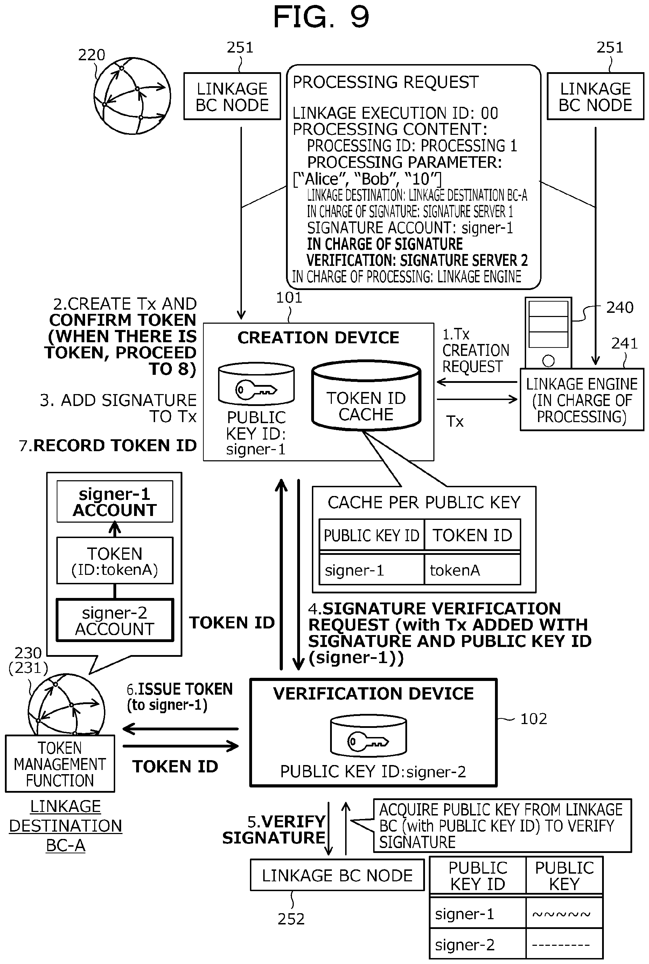

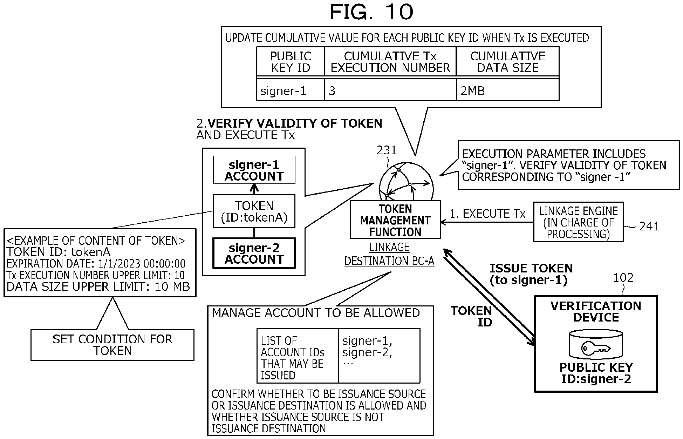

Next, a specific example of the information processing device 100 will be described with reference to FIGs. 9 and 10.

FIGs. 9 and 10 are explanatory diagrams illustrating the specific example of the information processing device 100. In the example of FIG. 9, as in FIG. 8, there is the creation device 101 corresponding to the linkage engine 241. Furthermore, there is the verification device 102. Furthermore, there is the linkage BC node 251 corresponding to the linkage engine 241. Furthermore, there is the linkage BC node 252 corresponding to the linkage engine 242. Furthermore, there is the linkage destination BC-A. In the following description, the linkage destination BC-A may be referred to as the "linkage destination BC 231".

In FIG. 9, the linkage BC node 252 stores a public key corresponding to each of one or more accounts in the linkage destination BC 231 in association with a public key ID for identifying the public key. The linkage destination BC 231 manages the account of the account of the signer1. Furthermore, the linkage destination BC 231 manages an account of an account of a signer2. The account of the signer2 corresponds to the verification device 102.

The creation device 101 includes the cache file that records the information indicating presence or absence of a valid token corresponding to each of one or more accounts in the linkage destination BC 231. The cache file includes, for example, correspondence information in which a public key ID for identifying an account is associated with a token ID for identifying a valid token corresponding to the account.

For example, a valid condition may be set for the token. The valid condition is, for example, a condition related to a period, the number of times of execution of a Tx in the linkage destination BC 231, a data amount of the Tx executed in the linkage destination BC 231, or the like. The correspondence information may include, for example, the condition set for the token.

The linkage engine 241 receives, from the client device 210, a linkage execution request that requests to start a series of processing of linking the plurality of linkage destination BCs 230 including the linkage destination BC 231. The linkage execution request includes, for example, a linkage execution ID for identifying the entire series of processing of linking, and a linkage execution parameter.

The linkage execution parameter is, for example, a parameter that defines content of each processing of the series of processing. Specifically, the linkage execution parameter may include an identifier for identifying the linkage destination BC 230 that is an object of any processing of the series of processing. Specifically, the linkage execution parameter may include an identifier for identifying an account that is an object of any processing of the series of processing in the linkage destination BC 230.

Based on the received linkage execution request, the linkage control device 240 transmits, to the linkage BC node 251 included in the linkage BC 220, a linkage start Tx that requests start of the series of processing of linking the plurality of linkage destination BCs 230. The linkage start Tx includes, for example, the linkage execution parameter. The linkage BC node 251 records the received linkage start Tx in the distributed ledger.

The linkage BC node 251 transmits, to the linkage engine 241, a processing request that requests execution of any processing of the series of processing based on the linkage start Tx according to the linkage rule. The linkage BC node 251 transmits the processing request to each information processing device 100.

The processing request includes, for example, the linkage execution ID for identifying the entire series of processing of linking. The processing request includes, for example, a processing ID for identifying specific processing to be executed this time in the series of processing. The processing request includes, for example, a processing parameter that defines content of the specific processing to be executed this time in the series of processing.

The processing parameter specifically includes an identifier for identifying one or more accounts handled in the specific processing described above in the linkage destination BC 230. The processing parameter specifically includes an identifier for identifying one or more pieces of data handled in the specific processing described above in the linkage destination BC 230. The processing parameter specifically includes an identifier for identifying a first account, an identifier for identifying a second account, and an identifier for identifying specific data when the specific data is moved from the first account to the second account in the specific processing described above.

The processing request includes, for example, information that specifies the information processing device 100 that operates as the creation device 101 that generates a Tx and adds a signature. The processing request includes, for example, an identifier for identifying an account for which a signature is to be generated. The processing request specifically includes an identifier for identifying the signer1 as the account for which a signature is to be generated. The processing request includes, for example, information that specifies the information processing device 100 that operates as the verification device 102 that verifies the signature and controls issuance of a token. The processing request includes, for example, information that specifies a linkage engine that executes the specific processing described above. A signature server 1 of the processing request indicates, for example, the creation device 101. A signature server 2 of the processing request indicates, for example, the verification device 102.

(9-1) The linkage engine 241 receives a processing request from the linkage BC node 251. The linkage engine 241 transmits a Tx creation request to the creation device 101. The Tx creation request includes, for example, a linkage execution ID for identifying the entire series of processing of linking and a processing ID for identifying specific processing to be executed this time in the series of processing.

The creation device 101 receives the processing request from the linkage BC node 251. The creation device 101 receives the Tx creation request from the linkage engine 241. When the Tx creation request is received, the creation device 101 specifies the linkage destination BC 231 based on the received processing request, and specifies the account of the signer1 that is an object to which a token is issued. The creation device 101 specifies a public key ID corresponding to the specified account of the signer1.

(9-2) The creation device 101 generates a Tx for the specified account of the signer1. The Tx may include, for example, the public key ID corresponding to the account of the signer1. Furthermore, the creation device 101 determines whether or not a valid token corresponding to the specified account of the signer1 is present.

For example, in a case where there is no token ID corresponding to the specified public key ID in the cache file, the creation device 101 determines that a valid token corresponding to the specified account of the signer1 is absent. For example, in a case where there is a token ID corresponding to the specified public key ID in the cache file, the creation device 101 determines that there is a valid token corresponding to the specified account of the signer1.

For example, in a case where there is a token ID corresponding to the specified public key ID in the cache file and there is a condition set for the token, the creation device 101 may determine whether or not the condition is satisfied. For example, in a case where it is determined that the condition is not satisfied, the creation device 101 determines that a valid token corresponding to the specified account of the signer1 is absent. For example, in a case where it is determined that the condition is satisfied, the creation device 101 determines that a valid token corresponding to the specified account of the signer1 is present.

Here, in a case where it is determined that a valid token is present, the creation device 101 omits processing of (9-3) to (9-7) described later, and transmits the generated Tx to the linkage engine 241. As a result, the creation device 101 may reduce a time needed from reception of the Tx creation request to transmission of the generated Tx to the linkage engine 241, in a case where it is determined that a valid token is present. Therefore, the creation device 101 may reduce a time needed from transmission of the Tx creation request by the linkage engine 241 to transmission of the Tx to the linkage destination BC 231.

(9-3) In a case where it is determined that a valid token is absent, the creation device 101 generates a signature for the generated Tx based on a secret key corresponding to the specified account of the signer1. The creation device 101 adds the generated signature to the generated Tx.

(9-4) The creation device 101 generates a signature verification request including the Tx added with the signature and the public key ID corresponding to the specified account of the signer1. The creation device 101 transmits the generated signature verification request to the verification device 102.

(9-5) Based on the signature verification request, the verification device 102 specifies the linkage destination BC 231 and specifies the account of the signer1 that is the object to which a token is issued. The verification device 102 specifies the public key ID corresponding to the specified account of the signer1 based on the signature verification request.

The verification device 102 inquires of the linkage BC node 252 about a public key corresponding to the specified account of the signer1 based on the specified public key ID. As a result of the inquiry, the verification device 102 receives, from the linkage BC node 252, the public key corresponding to the account of the signer1. The verification device 102 verifies validity of the signature added to the received Tx based on the received public key corresponding to the account of the signer1.

(9-6) In a case where it is determined that the signature is not valid, the verification device 102 determines not to issue a token. In a case where it is determined that the signature is valid, the verification device 102 controls the linkage destination BC 231 so as to issue a valid new token corresponding to the specified account of the signer1. The verification device 102 transmits, to the linkage destination BC 231, an issuance request that requests issuance of a valid new token in association with the specified account of the signer1. Here, description of FIG. 10 will be made.

In FIG. 10, the linkage destination BC 231 records an account that is allowed to be an object to which a token is issued or that is allowed to be an issuance source. The linkage destination BC 231 records, for example, the account of the signer1 and the account of the signer2 as the account that is allowed to be an object to which a token is issued or that is allowed to be an issuance source.

The linkage destination BC 231 determines whether or not to issue a token associated with the account of the signer1 and record the token in the distributed ledger in response to the issuance request based on the account that is allowed to be an object to which a token is issued or that is allowed to be an issuance source.

In the example of FIG. 10, since the account of the signer1 and the account of the signer2 are allowed to be an object to which a token is issued or to be an issuance source, the linkage destination BC 231 issues a token associated with the account of the signer1 and records the token in the distributed ledger in response to the issuance request. Here, for example, in a case where an account to be an object to which a token is issued and an account to be an issuance source that issues a token match, the linkage destination BC 231 does not have to issue a token.

The linkage destination BC 231 adds a token ID to the token associated with the account of the signer1. The token ID is, for example, tokenA. The linkage destination BC 231 adds the token ID to the token associated with the account of the signer1.

The token includes, for example, a valid condition. The condition includes, for example, an expiration date, a Tx execution number upper limit, and a data size upper limit. The expiration date indicates that, for example, the token is valid until the expiration date has passed. The Tx execution number upper limit indicates that, for example, the token is valid until the number of times of execution of a Tx related to the account to be an object to which a token is issued exceeds the Tx execution number upper limit. The data size upper limit indicates that, for example, the token is valid until a cumulative sum of data sizes of a Tx executed in the past for the account to be an object to which a token is issued exceeds the data size upper limit.

The linkage destination BC 231 records the token associated with the account of the signer1 added with the token ID in the distributed ledger. The linkage destination BC 231 transmits, to the verification device 102, the token ID added to the token associated with the account of the signer1. The verification device 102 transmits the received token ID to the creation device 101. Here, the description returns to FIG. 9.

In FIG. 9, (9-7) The creation device 101 receives, from the verification device 102, the token ID added to the token associated with the account of the signer1. The creation device 101 updates the cache file based on the received token ID. As a result, the creation device 101 may enable appropriate determination of presence or absence of a valid token corresponding to the account of the signer1 thereafter. Thereafter, the creation device 101 transmits the generated Tx to the linkage engine 241. Here, the description of FIG. 10 will be made.

In FIG. 10, (10-1) The linkage engine 241 receives a Tx from the creation device 101. The linkage engine 241 transmits the received Tx to the linkage destination BC 231 to cause the linkage destination BC 231 to execute the received Tx. A signature does not have to be added to the Tx. The Tx includes, for example, the public key ID corresponding to the account of the signer1.

(10-2) The linkage destination BC 231 records, in association with an account, the number of times of execution of a Tx in the past for the account and a cumulative sum of data sizes of the Tx executed in the past for the account. For example, the linkage destination BC 231 records the cumulative Tx execution number and a cumulative data size in association with the public key ID corresponding to the account of the signer1. The cumulative Tx execution number indicates the number of times of execution of the Tx in the past for the account. The cumulative data size indicates a cumulative sum of data sizes of the Tx executed in the past for the account.

The linkage destination BC 231 receives the Tx from the linkage engine 241. The linkage destination BC 231 acquires the public key ID corresponding to the account of the signer1 based on the received Tx. Based on the acquired public key ID, the linkage destination BC 231 determines whether or not a valid token corresponding to the account of the signer1 corresponding to the received Tx is present.

The linkage destination BC 231 acquires an expiration date, the cumulative Tx execution number, and a cumulative data size based on, for example, the acquired public key ID. The linkage destination BC 231 determines whether or not a valid token corresponding to the account of the signer1 is present based on, for example, the acquired expiration date, cumulative Tx execution number, and cumulative data size.

In a case where it is determined that a valid token is absent, the linkage destination BC 231 discards the received Tx without execution. In a case where it is determined that a valid token is present, the linkage destination BC 231 records the received Tx in the distributed ledger by executing the received Tx.

As a result, the creation device 101 may disenable generation of a signature and a token only with the linkage engine 241, and may facilitate avoidance of an attack by the linkage engine 241 on the linkage processing system 200. By causing the linkage destination BC 231 to record the token, the creation device 101 may omit the processing of generating a signature when a Tx is generated thereafter. Therefore, the creation device 101 may reduce a time needed from transmission of the Tx creation request by the linkage engine 241 to transmission of the Tx to the linkage destination BC 231.

### (Example of Information Processing Device 100)

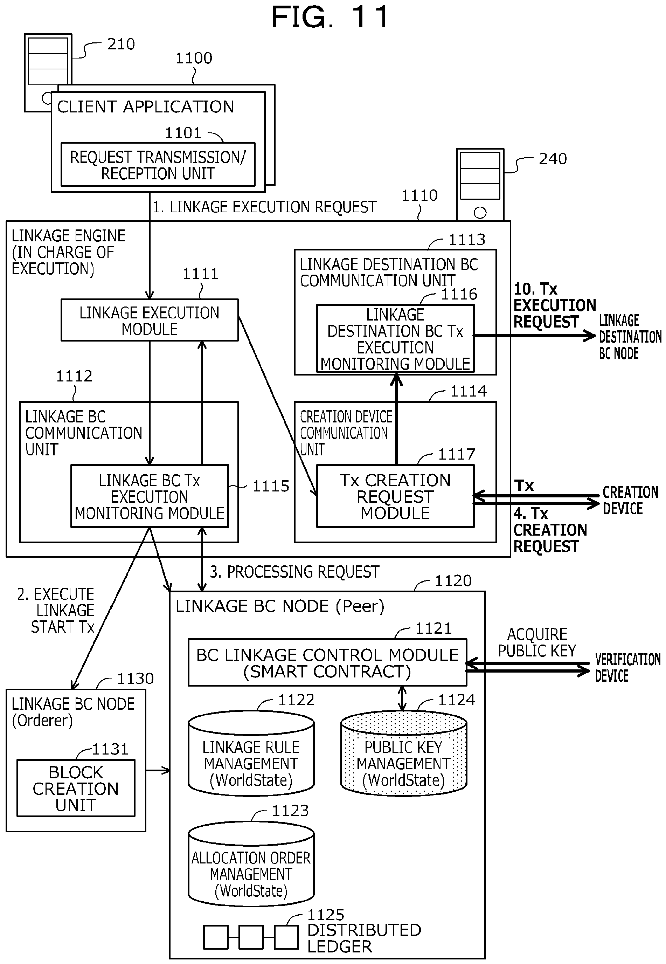

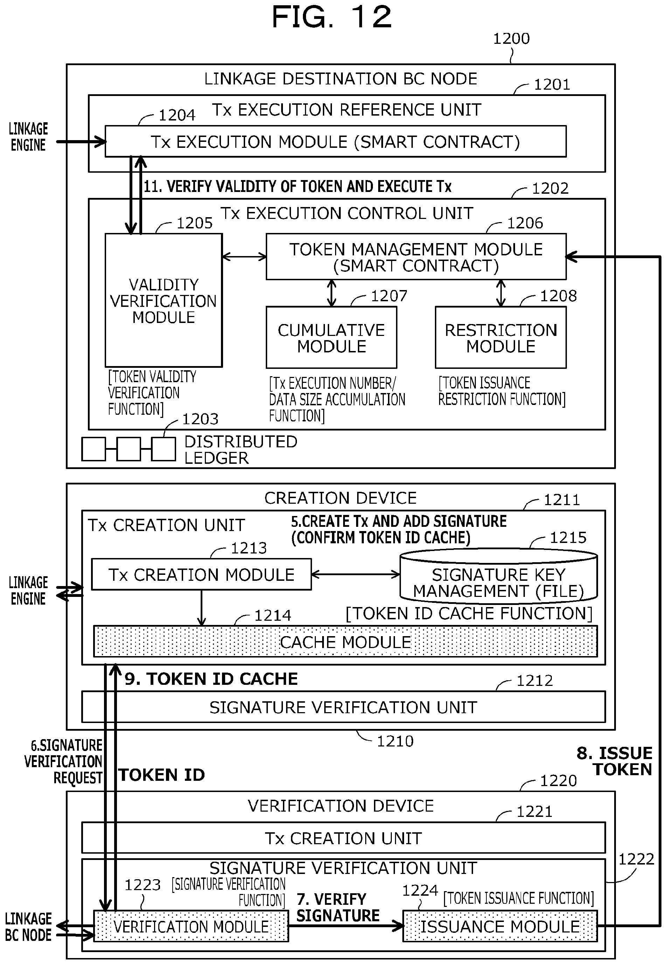

Next, an example of the information processing device 100 will be described with reference to FIGs. 11 and 12.

FIGs. 11 and 12 are explanatory diagrams illustrating the example of the information processing device 100. In FIG. 11, the client device 210 includes a client application 1100. The client application 1100 includes a request transmission/reception unit 1101.

The linkage control device 240 includes a linkage engine 1110. The linkage engine 1110 includes a linkage execution module 1111, a linkage BC communication unit 1112, a linkage destination BC communication unit 1113, and a creation device communication unit 1114. The linkage BC communication unit 1112 includes a linkage BC Tx execution monitoring module 1115. The linkage destination BC communication unit 1113 includes a linkage destination BC Tx execution monitoring module 1116. The creation device communication unit 1114 includes a Tx creation request module 1117.

A linkage BC node 1120 serving as a Peer that is a component of a consortium type BC includes a BC linkage control module 1121, linkage rule management 1122, allocation order management 1123, and public key management 1124. The linkage rule management 1122, the allocation order management 1123, and the public key management 1124 are recorded in a distributed ledger 1125. A linkage BC node 1130 serving as an Orderer that is a component of the consortium type BC includes a block creation unit 1131. Next, description of FIG. 12 will be made.

In FIG. 12, a linkage destination BC node 1200 includes a Tx execution reference unit 1201, a Tx execution control unit 1202, and a distributed ledger 1203. The Tx execution reference unit 1201 includes a Tx execution module 1204. The Tx execution control unit 1202 includes a validity verification module 1205, a token management module 1206, a cumulative module 1207, and a restriction module 1208.

A creation device 1210 includes a Tx creation unit 1211 and a signature verification unit 1212. The Tx creation unit 1211 includes a Tx creation module 1213, a cache module 1214, and signature key management 1215. The signature verification unit 1212 is, for example, similar to a signature verification unit 1222 described later. A verification device 1220 includes a Tx creation unit 1221 and the signature verification unit 1222. The Tx creation unit 1221 is similar to the Tx creation unit 1211. The signature verification unit 1222 includes a verification module 1223 and an issuance module 1224.

(11-1) The request transmission/reception unit 1101 transmits a linkage execution request to the linkage execution module 1111. The linkage execution module 1111 adds a linkage execution ID to the linkage execution request. The linkage execution module 1111 transmits the linkage execution request added with the linkage execution ID to the linkage BC Tx execution monitoring module 1115.

(11-2) The linkage BC Tx execution monitoring module 1115 transmits a linkage start Tx to the linkage BC node 1120 and the linkage BC node 1130 based on the linkage execution request, thereby causing the linkage BC 220 to execute the linkage start Tx.

(11-3) The block creation unit 1131 of the linkage BC node 1130 generates a block in which the linkage start Tx is recorded, and distributes the block to the linkage BC node 1120. The linkage BC node 1120 records the distributed block in the distributed ledger 1125.

In response to the linkage start Tx of the block, the BC linkage control module 1121 transmits a processing request to the linkage BC communication unit 1112 with reference to the linkage rule management 1122. The linkage BC communication unit 1112 transmits the processing request to the Tx creation request module 1117 via the linkage execution module 1111.

(11-4) The Tx creation request module 1117 specifies the creation device 1210 based on the processing request. The Tx creation request module 1117 generates a Tx creation request based on the processing request. The Tx creation request module 1117 transmits the generated Tx creation request to the creation device 1210. The Tx creation request includes a public key ID corresponding to an object account.

The Tx creation module 1213 acquires the public key ID corresponding to the object account based on the Tx creation request. The Tx creation module 1213 cooperates with the cache module 1214 to determine whether or not a valid token corresponding to the acquired public key ID is present in the signature key management 1215. Here, in a case where a valid token corresponding to the acquired public key ID is present, the Tx creation module 1213 generates a Tx for the object account in the linkage destination BC 230 and transmits the Tx to the Tx creation request module 1117.

(11-5) In a case where a valid token corresponding to the acquired public key ID is absent, the Tx creation module 1213 generates a Tx for the object account in the linkage destination BC 230. The Tx creation module 1213 generates a signature for the generated Tx based on a secret key corresponding to the object account. The Tx creation module 1213 transmits the Tx added with the generated signature to the cache module 1214 together with the acquired public key ID.

(11-6) The cache module 1214 specifies the verification device 1220 based on the processing request. The cache module 1214 transmits the Tx added with the signature and the public key ID to the verification module 1223 of the specified verification device 1220.

(11-7) The verification module 1223 receives the Tx added with the signature and the public key ID. The verification module 1223 executes the BC linkage control module 1121 of the linkage BC node 1120 based on the public key ID, and acquires a public key indicated by the public key ID. The verification module 1223 verifies validity of the signature added to the received Tx based on the acquired public key. In a case where the signature is not valid, the verification module 1223 discards the Tx and transmits the result of the verification to the cache module 1214.

(11-8) In a case where the signature is valid, the verification module 1223 transmits the result of the verification to the issuance module 1224. The issuance module 1224 executes the token management module 1206 of the linkage destination BC node 1200, and controls the linkage destination BC node 1200 so as to issue a token for the object account. The token includes, for example, an expiration date, a Tx execution number upper limit, a data size upper limit, or the like.

At this time, the restriction module 1208 may determine whether or not a pair of the object account and the verification device 1220 is a pair to which the token may be issued, and control whether or not to issue the token in the token management module 1206. At this time, the cumulative module 1207 initializes a Tx execution number and a data size cumulative sum. The token management module 1206 may determine whether or not the pair of the object account and the verification device 1220 is the pair to which the token may be issued, and determine whether or not to issue the token.

The token management module 1206 adds a token ID to the issued token. The token management module 1206 transmits the token ID to the verification module 1223 via the issuance module 1224. The verification module 1223 transmits the token ID to the cache module 1214.

(11-9) The cache module 1214 receives the token ID. The cache module 1214 updates the signature key management 1215 based on the received token ID. The cache module 1214 records, in the signature key management 1215, correspondence information in which the received token ID is associated with the acquired public key ID. In response to the correspondence information being recorded in the signature key management 1215, the Tx creation module 1213 transmits the generated Tx together with the public key ID to the Tx creation request module 1117.

(11-10) The Tx creation request module 1117 receives the Tx together with the public key ID. The Tx creation request module 1117 transmits the received Tx together with the public key ID to the linkage destination BC Tx execution monitoring module 1116. The linkage destination BC Tx execution monitoring module 1116 transmits the received Tx together with the public key ID to the Tx execution module 1204.

(11-11) Tx execution module 1204 receives the Tx together with the public key ID. The Tx execution module 1204 transmits the public key ID to the validity verification module 1205. The validity verification module 1205 specifies the object account based on the public key ID. The validity verification module 1205 verifies, based on the public key ID, whether or not a valid token corresponding to the object account is present.

The validity verification module 1205 receives the Tx execution number and the data size cumulative sum from the cumulative module 1207 via, for example, the token management module 1206. The validity verification module 1205 verifies whether or not a valid token corresponding to the object account is present based on, for example, the Tx execution number and the data size cumulative sum. The validity verification module 1205 transmits a result of the verification to the Tx execution module 1204 and the token management module 1206.

In a case where a valid token is present, the Tx execution module 1204 executes the Tx. In a case where a valid token is present, the token management module 1206 controls the cumulative module 1207 to update the Tx execution number and the data size cumulative sum. In a case where a valid token is absent, the Tx execution module 1204 discards the Tx without execution.

### (Overall Processing Procedure)

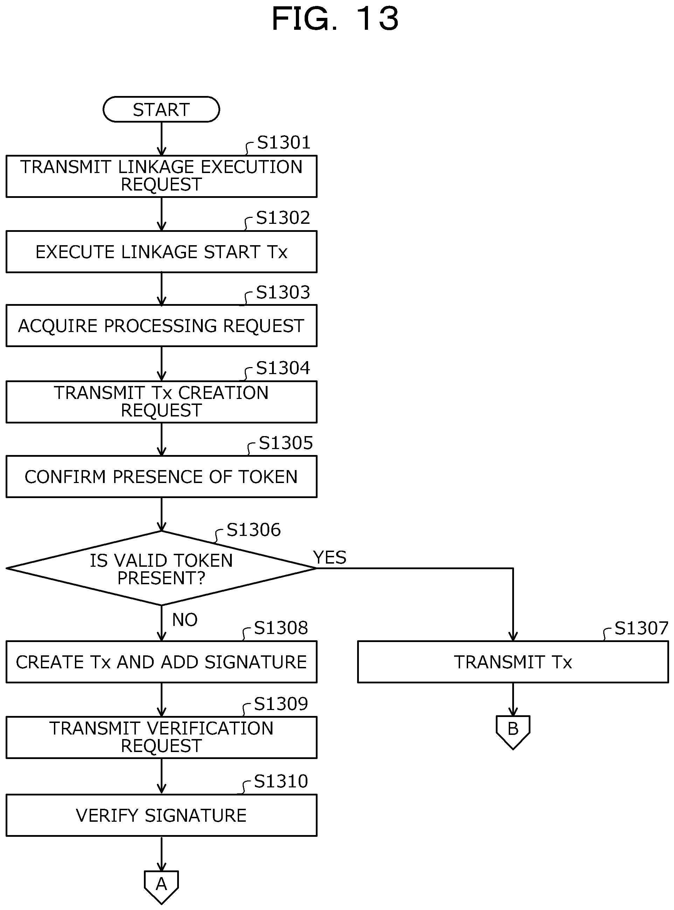

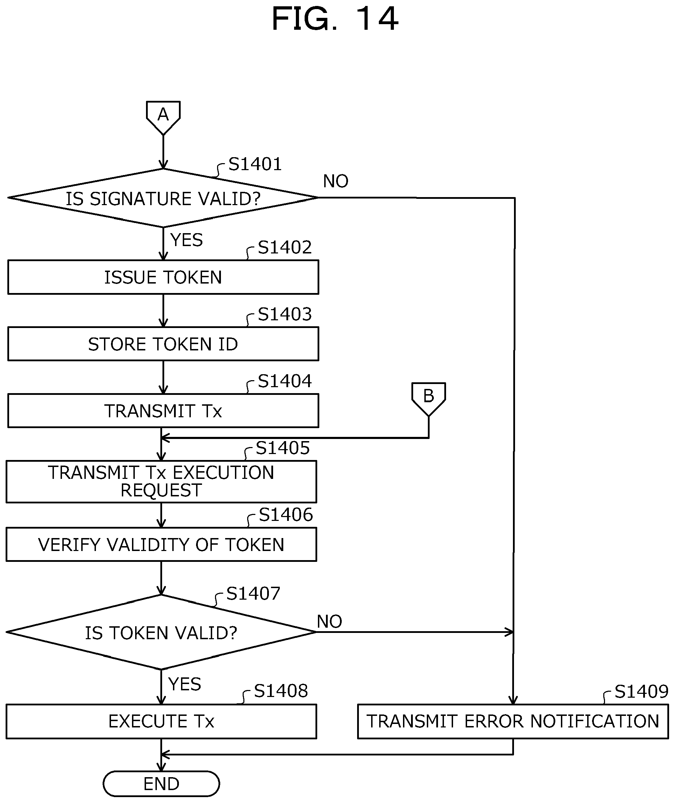

Next, an example of an overall processing procedure executed by the linkage processing system 200 will be described with reference to FIGs. 13 and 14.

FIGs. 13 and 14 are flowcharts illustrating an example of the overall processing procedure. In FIG. 13, the client application 1100 transmits a linkage execution request to the linkage BC Tx execution monitoring module 1115 of the linkage engine (step S1301).

In the linkage engine 1110, when the linkage execution request is received, the linkage BC Tx execution monitoring module 1115 transmits a linkage start Tx to the linkage BC node 1130, thereby causing the linkage BC 220 to execute the linkage start Tx (step S1302). The linkage engine 1110 acquires a processing request from the linkage BC node 1120 (step S1303). In the linkage engine 1110, when the processing request is received, the Tx creation request module 1117 transmits a Tx creation request to the creation device 1210 (step S1304).

In the creation device 1210, when the Tx creation request is received, the Tx creation module 1213 confirms presence of a valid token for an object account (step S1305). As a result of the confirmation, the Tx creation module 1213 determines whether or not a valid token is present in the signature key management 1215 (step S1306). Here, in a case where a valid token is present (step S1306: Yes), the creation device 1210 proceeds to processing of step S1307. On the other hand, in a case where a valid token is absent (step S1306: No), the creation device 1210 proceeds to processing of step S1308.

In step S1307, in the creation device 1210, the Tx creation module 1213 generates a Tx and transmits the Tx to the linkage engine 1110 (step S1307). When the Tx is received, the linkage engine 1110 proceeds to processing of step S1404 in FIG. 14.

In step S1308, in the creation device 1210, the Tx creation module 1213 generates a Tx and adds a signature related to the object account (step S1308). In the creation device 1210, the cache module 1214 transmits a verification request including the Tx added with the signature to the verification device 1220 (step S1309).

In the verification device 1220, when the verification request is received, the verification module 1223 acquires a public key corresponding to the object account and verifies the signature added to the Tx (step S1310). Next, the verification module 1223 proceeds to step S1401 in FIG. 14.

In FIG. 14, the verification module 1223 determines whether or not the signature is valid (step S1401). Here, in a case where the signature is not valid (Step S1401: No), the verification device 1220 proceeds to processing of Step S1409. On the other hand, in a case where the signature is valid (Step S1401: Yes), the verification device 1220 proceeds to processing of Step S1402.

In step S1402, in the verification device 1220, the issuance module 1224 controls the token management module 1206 so as to issue a token, and acquires a token ID from the token management module 1206 (step S1402). In the verification device 1220, the verification module 1223 acquires the token ID from the issuance module 1224, and transmits the token ID to the creation device 1210.

In the creation device 1210, the cache module 1214 stores the token ID in the signature key management 1215 (step S1403). In the creation device 1210, the Tx creation module 1213 transmits the Tx to the linkage engine 1110 (step S1404).

In the linkage engine 1110, based on the received Tx, the Tx creation request module 1117 transmits a Tx execution request to the linkage destination BC node 1200 (step S1405).

In the linkage destination BC node 1200, the Tx execution module 1204 verifies validity of the token via the validity verification module 1205 (step S1406). The validity verification module 1205 determines whether or not the token is valid (step S1407). Here, in a case where the token is valid (step S1407: Yes), the Tx execution module 1204 proceeds to processing of step S1408. On the other hand, in a case where the token is not valid (step S1407: No), the Tx execution module 1204 proceeds to processing of step S1409.

In step S1408, in the linkage destination BC 230, the Tx execution module 1204 executes the Tx (step S1408). Then, the linkage processing system 200 ends the overall processing. In step S1409, the Tx creation module 1213 or the Tx execution module 1204 transmits an error notification to the linkage engine 1110 (step S1409). Then, the linkage processing system 200 ends the overall processing.

### (Initial Creation Processing Procedure)

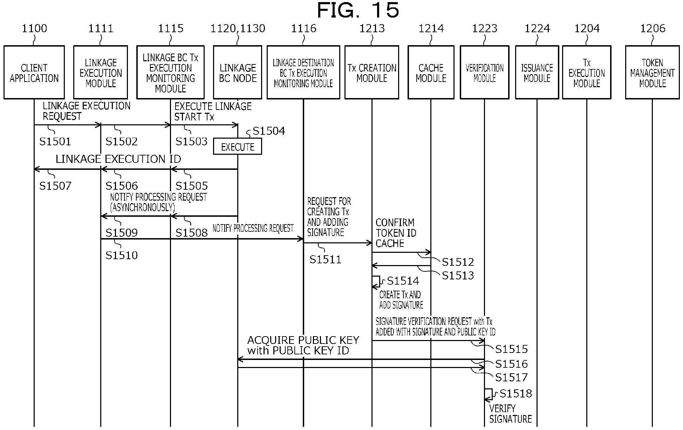

Next, an example of an initial creation processing procedure executed by the linkage processing system 200 will be described with reference to FIGs. 15 to 17.

FIGs. 15 to 17 are sequence diagrams illustrating an example of the initial creation processing procedure. In FIG. 15, the client application 1100 transmits, to the linkage execution module 1111, a linkage execution request that requests execution of a series of processing of linking (step S1501).

The linkage execution module 1111 receives the linkage execution request, and transmits the linkage execution request to the linkage BC Tx execution monitoring module 1115 (step S1502). When the linkage execution request is received, the linkage BC Tx execution monitoring module 1115 generates a linkage start Tx, and controls the linkage BC nodes 1120 and 1130 such that the linkage BC nodes 1120 and 1130 execute the linkage start Tx (step S1503).

The linkage BC nodes 1120 and 1130 execute the received linkage start Tx (step S1504). When the linkage start Tx is executed, the linkage BC node 1120 generates a linkage execution ID, and transmits the linkage execution ID to the linkage BC Tx execution monitoring module 1115 (step S1505).

The linkage BC Tx execution monitoring module 1115 receives the linkage execution ID, and transmits the linkage execution ID to the linkage execution module 1111 (step S1506). The linkage execution module 1111 receives the linkage execution ID, and transmits the linkage execution ID to the client application 1100 (step S1507).

When the linkage start Tx is executed, the linkage BC node 1120 transmits, to the linkage BC Tx execution monitoring module 1115, a processing request that requests execution of any processing of the series of processing (step S1508).

The linkage BC Tx execution monitoring module 1115 receives the processing request, and transmits the processing request to the linkage execution module 1111 (step S1509). The linkage execution module 1111 receives the processing request, and transmits the processing request to the linkage destination BC Tx execution monitoring module 1116 (step S1510). When the processing request is received, the linkage destination BC Tx execution monitoring module 1116 transmits, to the Tx creation module 1213, a Tx creation request that requests generation of a Tx related to the any processing (step S1511).

When the Tx creation request is received, the Tx creation module 1213 transmits, to the cache module 1214, a confirmation request that requests confirmation of presence or absence of a valid token (step S1512). The cache module 1214 transmits the received confirmation request to the Tx creation module 1213 (step S1513).

Based on a result of the confirmation, the Tx creation module 1213 generates a Tx and adds a signature (step S1514). The Tx creation module 1213 generates a verification request that requests verification of validity of the signature, and transmits the verification request to the verification module 1223 (step S1515).

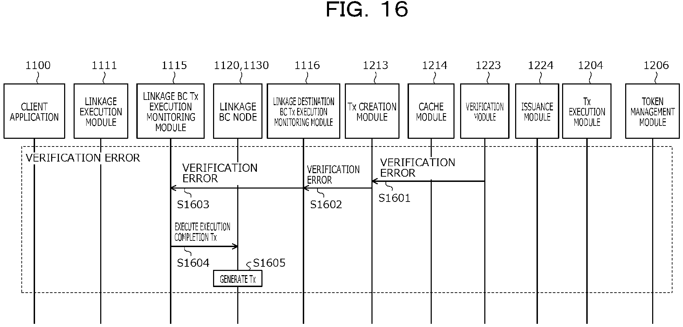

The verification module 1223 inquires of the linkage BC node 1120 about a public key based on the public key ID (step S1516). The verification module 1223 receives the public key from the linkage BC node 1120 (step S1517). The verification module 1223 verifies the validity of the signature (step S1518). Next, description of FIG. 16 will be made.

In FIG. 16, it is assumed that the verification module 1223 determines that the signature is not valid. The verification module 1223 generates a verification error, and transmits the verification error to the Tx creation module 1213 (step S1601). The Tx creation module 1213 transmits the received verification error to the linkage destination BC Tx execution monitoring module 1116 (step S1602).

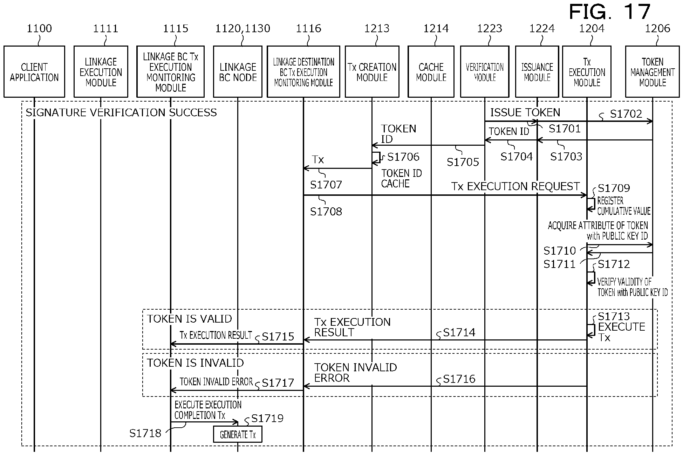

The linkage destination BC Tx execution monitoring module 1116 transmits the received verification error to the linkage BC Tx execution monitoring module 1115 (step S1603). When the verification error is received, the linkage BC Tx execution monitoring module 1115 generates an execution completion Tx, and transmits the execution completion Tx to the linkage BC nodes 1120 and 1130 (step S1604). The linkage BC nodes 1120 and 1130 receive the execution completion Tx, and execute the execution completion Tx. Then, the linkage processing system 200 ends the initial creation processing. Next, description of FIG. 17 will be made.

In FIG. 17, it is assumed that the verification module 1223 determines that the signature is valid. The verification module 1223 generates an issuance request that requests issuance of a token, and transmits the issuance request to the issuance module 1224 (step S1701). The issuance module 1224 controls the token management module 1206 so as to issue a token (step S1702).

The token management module 1206 issues a token, generates a token ID corresponding to the issued token, and transmits the token ID to the issuance module 1224 (step S1703).

The issuance module 1224 receives the token ID, and transmits the token ID to the verification module 1223 (step S1704). The verification module 1223 receives the token ID, and transmits the token ID to the Tx creation module 1213 (step S1705).

The Tx creation module 1213 records the token ID in the signature key management 1215 (step S1706). The Tx creation module 1213 generates a Tx, and transmits the Tx to the linkage destination BC Tx execution monitoring module 1116 (step S1707).

When the Tx is received, the linkage destination BC Tx execution monitoring module 1116 generates a Tx execution request, and transmits the Tx execution request to the Tx execution module 1204 (step S1708).

The Tx execution module 1204 updates a cumulative value such as the Tx execution number and a data size cumulative sum (step S1709). The Tx execution module 1204 inquires of the token management module 1206 about a condition under which the token is valid based on the public key ID (step S1710). The Tx execution module 1204 receives the condition under which the token is valid from the token management module 1206 (step S1711). The Tx execution module 1204 determines whether or not a valid token is present based on the condition under which the token is valid (step S1712).

Here, in a case where a valid token is present (step S1712: Yes), the Tx execution module 1204 executes the received Tx (step S1713). The Tx execution module 1204 generates a Tx execution result, and transmits the Tx execution result to the linkage destination BC Tx execution monitoring module 1116 (step S1714). The linkage destination BC Tx execution monitoring module 1116 receives the Tx execution result, and transmits the Tx execution result to the linkage BC Tx execution monitoring module 1115 (step S1715). The linkage BC Tx execution monitoring module 1115 proceeds to processing of step S1718.

On the other hand, in a case where a valid token is absent (step S1712: No), the Tx execution module 1204 generates a Tx execution result representing a token invalid error, and transmits the Tx execution result to the linkage destination BC Tx execution monitoring module 1116 (step S1716). The linkage destination BC Tx execution monitoring module 1116 receives the Tx execution result, and transmits the Tx execution result to the linkage BC Tx execution monitoring module 1115 (step S1717). The linkage BC Tx execution monitoring module 1115 proceeds to the processing of step S1718.

In step S1718, the linkage BC Tx execution monitoring module 1115 transmits the Tx execution result to the linkage BC nodes 1120 and 1130 to cause the linkage BC 220 to execute the Tx execution result (step S1718). The linkage BC nodes 1120 and 1130 execute the Tx execution result (step S1719). Then, the linkage processing system 200 ends the initial creation processing.

### (Re-creation Processing Procedure)

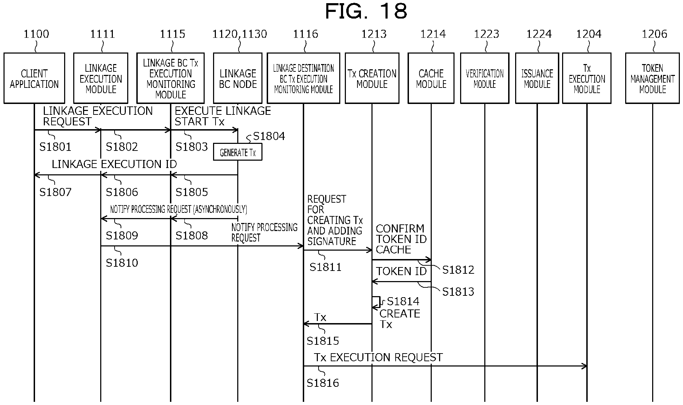

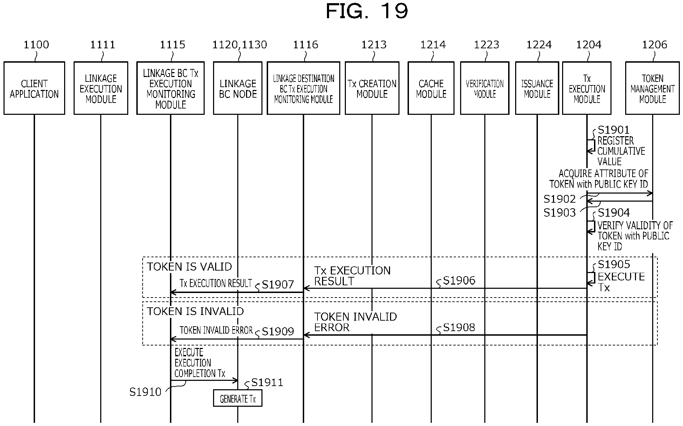

Next, an example of a re-creation processing procedure executed by the information processing device 100 will be described with reference to FIGs. 18 and 19. Re-creation processing is implemented by, for example, the CPU 401, a storage area such as the memory 402 or the recording medium 405, and the network I/F 403 illustrated in FIG. 4.

FIGs. 18 and 19 are sequence diagrams illustrating an example of the re-creation processing procedure. In FIG. 18, the client application 1100 transmits, to the linkage execution module 1111, a linkage execution request that requests execution of a series of processing of linking (step S1801).

The linkage execution module 1111 receives the linkage execution request, and transmits the linkage execution request to the linkage BC Tx execution monitoring module 1115 (step S1802). When the linkage execution request is received, the linkage BC Tx execution monitoring module 1115 generates a linkage start Tx, and controls the linkage BC nodes 1120 and 1130 such that the linkage BC nodes 1120 and 1130 execute the linkage start Tx (step S1803).

The linkage BC nodes 1120 and 1130 execute the received linkage start Tx (step S1804). When the linkage start Tx is executed, the linkage BC node 1120 generates a linkage execution ID, and transmits the linkage execution ID to the linkage BC Tx execution monitoring module 1115 (step S1805).

The linkage BC Tx execution monitoring module 1115 receives the linkage execution ID, and transmits the linkage execution ID to the linkage execution module 1111 (step S1806). The linkage execution module 1111 receives the linkage execution ID, and transmits the linkage execution ID to the client application 1100 (step S1807).

When the linkage start Tx is executed, the linkage BC node 1120 transmits, to the linkage BC Tx execution monitoring module 1115, a processing request that requests execution of any processing of the series of processing (step S1808).

The linkage BC Tx execution monitoring module 1115 receives the processing request, and transmits the processing request to the linkage execution module 1111 (step S1809). The linkage execution module 1111 receives the processing request, and transmits the processing request to the linkage destination BC Tx execution monitoring module 1116 (step S1810). When the processing request is received, the linkage destination BC Tx execution monitoring module 1116 transmits, to the Tx creation module 1213, a Tx creation request that requests generation of a Tx related to the any processing (step S1811).

When the Tx creation request is received, the Tx creation module 1213 transmits, to the cache module 1214, a confirmation request that requests confirmation of presence or absence of a valid token (step S1812). The cache module 1214 transmits the received confirmation request to the Tx creation module 1213 (step S1813).

The Tx creation module 1213 generates a Tx based on a result of the confirmation (step S1814). The Tx creation module 1213 transmits the generated Tx to the linkage destination BC Tx execution monitoring module 1116 (step S1815).

When the Tx is received, the linkage destination BC Tx execution monitoring module 1116 generates a Tx execution request, and transmits the Tx execution request to the Tx execution module 1204 (step S1816). Next, description of FIG. 19 will be made.

The Tx execution module 1204 updates a cumulative value such as the Tx execution number and a data size cumulative sum (step S1901). The Tx execution module 1204 inquires of the token management module 1206 about a condition under which the token is valid based on the public key ID (step S1902). The Tx execution module 1204 receives the condition under which the token is valid from the token management module 1206 (step S1903). The Tx execution module 1204 determines whether or not a valid token is present based on the condition under which the token is valid (step S1904).

Here, in a case where a valid token is present (step S1904: Yes), the Tx execution module 1204 executes the received Tx (step S1905). The Tx execution module 1204 generates a Tx execution result, and transmits the Tx execution result to the linkage destination BC Tx execution monitoring module 1116 (step S1906). The linkage destination BC Tx execution monitoring module 1116 receives the Tx execution result, and transmits the Tx execution result to the linkage BC Tx execution monitoring module 1115 (step S1907). The linkage BC Tx execution monitoring module 1115 proceeds to processing of step S1910.

On the other hand, in a case where a valid token is absent (step S1904: No), the Tx execution module 1204 generates a Tx execution result representing a token invalid error, and transmits the Tx execution result to the linkage destination BC Tx execution monitoring module 1116 (step S1908). The linkage destination BC Tx execution monitoring module 1116 receives the Tx execution result, and transmits the Tx execution result to the linkage BC Tx execution monitoring module 1115 (step S1909). The linkage BC Tx execution monitoring module 1115 proceeds to the processing of step S1910.

In step S1910, the linkage BC Tx execution monitoring module 1115 transmits the Tx execution result to the linkage BC nodes 1120 and 1130 to cause the linkage BC 220 to execute the Tx execution result (step S1910). The linkage BC nodes 1120 and 1130 execute the Tx execution result (step S1911). Then, the linkage processing system 200 ends the re-creation processing.

As described above, according to the information processing device 100, it is possible to receive, from a linkage unit that links between BCs, a processing request that requests generation of a Tx for an object account in an object BC. According to the information processing device 100, it is possible to determine whether or not a valid existing token related to the object account in the object BC is present based on management information and the received processing request. According to the information processing device 100, in a case where it is determined that the existing token is absent, it is possible to generate a first Tx for the object account in the object BC, which is added with a signature related to the object account. According to the information processing device 100, it is possible to control the object BC so as to store a valid new token related to the object account in the object BC, update the management information, and return the generated first Tx to the linkage unit. According to the information processing device 100, in a case where it is determined that the existing token is present, it is possible to generate a second Tx for the object account in the object BC, and return the generated second Tx to the linkage unit. As a result, the information processing device 100 may facilitate avoidance of an attack by the linkage unit on the object BC.

According to the information processing device 100, in a case where it is determined that the existing token is absent, it is possible to control the object BC so as to store a new token via a verification unit, and update the management information. As a result, the information processing device 100 may enable the verification unit to verify validity of the signature, and may facilitate avoidance of an attack by the linkage unit on the object BC.

According to the information processing device 100, in a case where it is determined that the existing token is absent, it is possible to receive an identifier for identifying a new token from the object BC as a result of controlling the object BC so as to store a new token via the verification unit. According to the information processing device 100, it is possible to update the management information based on the received identifier for identifying the new token. As a result, the information processing device 100 may appropriately update the management information.

According to the information processing device 100, in a case where it is determined that the existing token is absent, it is possible to receive an identifier for identifying a new token for which a valid condition is set from the object BC as a result of controlling the object BC so as to store a new token via the verification unit. As a result, the information processing device 100 may appropriately update the management information.

According to the information processing device 100, it is possible to communicate with the linkage unit that transmits, to the object BC, the received first Tx or the received second Tx. According to the information processing device 100, it is possible to communicate with the object BC that executes the first Tx or the second Tx in a case where a valid token is present when the first Tx or the second Tx is received. As a result, the information processing device 100 may enable the object BC to execute the first Tx or the second Tx.

According to the information processing device 100, it is possible to communicate with the object BC that does not store a new token in a case where the object account is not an account to which a token is allowed to be issued. As a result, the information processing device 100 may control the object BC with improved safety.

According to the information processing device 100, it is possible to communicate with a linkage unit that exists in another computer different from the information processing device 100. According to the information processing device 100, it is possible to communicate with a verification unit existing outside. As a result, the information processing device 100 may increase the number of reliability points, and facilitate avoidance of an attack by another computer on the object BC.

Note that the information processing method described in the present embodiment may be implemented by a computer such as a PC or a workstation executing a program prepared beforehand. The information processing program described in the present embodiment is executed by being recorded in a computer-readable recording medium and being read from the recording medium by the computer. The recording medium is a hard disk, a flexible disk, a compact disc (CD)-ROM, a magneto optical disc (MO), a digital versatile disc (DVD), or the like. Furthermore, the information processing program described in the present embodiment may be distributed via a network such as the Internet.

## Claims

1. An information processing device comprising a control unit that:
receives, from a linkage unit that links between blockchains, a processing request that requests generation of a transaction for an object account in an object blockchain;
determines whether or not a valid existing token related to the object account in the object blockchain is present based on management information that represents presence or absence of a valid token related to each of one or more accounts in the object blockchain and the received processing request;
in a case where it is determined that the existing token is absent, generates a first transaction for the object account in the object blockchain, which is added with a signature related to the object account, controls the object blockchain so as to issue a valid new token related to the object account in the object blockchain, updates the management information, and return the generated first transaction to the linkage unit; and
in a case where it is determined that the existing token is present, generates a second transaction for the object account in the object blockchain, and returns the generated second transaction to the linkage unit.

2. The information processing device according to claim 1, wherein
the control unit
generates, in a case where it is determined that the existing token is absent, the first transaction, controls the object blockchain so as to store the new token via a verification unit that controls the object blockchain so as to issue the new token in a case where the signature is valid, updates the management information, and returns the generated first transaction to the linkage unit.

3. The information processing device according to claim 2, wherein
the management information is correspondence information in which an identifier that identifies each account is associated with an identifier that identifies a valid token related to the account, and
the control unit
updates the management information based on an identifier that identifies the new token received from the object blockchain.

4. The information processing device according to claim 1, wherein
the control unit
controls the object blockchain so as to issue a new token for which a valid condition related to the object account in the object blockchain is set.

5. The information processing device according to any one of claims 1 to 4, wherein
the linkage unit transmits the received first transaction or the received second transaction to the object blockchain, and
the object blockchain executes the first transaction or the second transaction in a case where a valid token is present when the first transaction or the second transaction is received.

6. The information processing device according to any one of claims 2 to 4, wherein the object blockchain issues the new token in a case where the object account is an account to which a token is allowed to be issued, and does not issue the new token in a case where the object account is not an account to which a token is allowed to be issued.

7. The information processing device according to any one of claims 2 to 4, wherein
the linkage unit exists in another computer different from the information processing device, and
the verification unit exists outside.

8. An information processing method comprising:
receiving, from a linkage unit that links between blockchains, a processing request that requests generation of a transaction for an object account in an object blockchain;
determining whether or not a valid existing token related to the object account in the object blockchain is present based on management information that represents presence or absence of a valid token related to each of one or more accounts in the object blockchain and the received processing request;
in a case where it is determined that the existing token is absent, generating a first transaction for the object account in the object blockchain, which is added with a signature related to the object account, controling the object blockchain so as to issue a valid new token related to the object account in the object blockchain, updating the management information, and returning the generated first transaction to the linkage unit; and
in a case where it is determined that the existing token is present, generating a second transaction for the object account in the object blockchain, and returning the generated second transaction to the linkage unit.

9. An information processing program causing a computer to execute a process of:
receiving, from a linkage unit that links between blockchains, a processing request that requests generation of a transaction for an object account in an object blockchain;
determining whether or not a valid existing token related to the object account in the object blockchain is present based on management information that represents presence or absence of a valid token related to each of one or more accounts in the object blockchain and the received processing request;
in a case where it is determined that the existing token is absent, generating a first transaction for the object account in the object blockchain, which is added with a signature related to the object account, controlling the object blockchain so as to issue a valid new token related to the object account in the object blockchain, updating the management information, and returning the generated first transaction to the linkage unit; and
in a case where it is determined that the existing token is present, generating a second transaction for the object account in the object blockchain, and returning the generated second transaction to the linkage unit.
